# EUROPEAN PATENT APPLICATION

(11) **EP 4 178 307 A1**
(43) Date of publication of application: **10.05.2023**
(21) Application number: 21846175.4
(22) Date of filing: 06.07.2021
(51) Int. Cl.: H04W 76/14

(54) **METHOD, APPARATUS AND SYSTEM FOR ESTABLISHING DIRECT LINK, AND METHOD, APPARATUS AND SYSTEM FOR SENDING WIRELESS LOCAL AREA NETWORK FRAME**

(30) Priority: 24.07.2020 CN 202010725967
(71) Applicant: Huawei Technologies Co., Ltd., Longgang District, Shenzhen, Guangdong 518129 (CN)
(72) Inventor: SANG, Ran, Shenzhen, Guangdong 518129 (CN); PAN, Chun, Shenzhen, Guangdong 518129 (CN); JI, Chenhe, Shenzhen, Guangdong 518129 (CN); WANG, Yungui, Shenzhen, Guangdong 518129 (CN); JIANG, Xingfeng, Shenzhen, Guangdong 518129 (CN)
(74) Representative: Isarpatent
(86) International application number: PCT/CN2021/104762
(87) International publication number: WO 2022/017173

(57) **Abstract**

A method, an apparatus, and a system for setting up a direct link, and a method and an apparatus for sending a wireless local area network frame are disclosed. The method includes: A first multi-link device sets up, based on parameters of a plurality of stations belonging to the first multi-link device and device information of a second multi-link device, at least one direct link between the first multi-link device and the second multi-link device. Each of the at least one direct link is connected to one of the plurality of stations belonging to the first multi-link device and one station belonging to the second multi-link device. This application can improve reliability and a throughput of data transmission.

## Description

This application claims priority to Chinese Patent Application No. 202010725967.1, filed on July 24, 2020 and entitled "METHOD, APPARATUS, AND SYSTEM FOR SETTING UP DIRECT LINK, AND METHOD AND APPARATUS FOR SENDING WIRELESS LOCAL AREA NETWORK FRAME", which is incorporated herein by reference in its entirety.

### TECHNICAL FIELD

This application relates to a communications field, and in particular, to a method, an apparatus, and a system for setting up a direct link, and a method and an apparatus for sending a wireless local area network frame.

### BACKGROUND

A wireless local area network (wireless local area network, WLAN) system refers to a network system in which different stations (stations, STAs) are connected by using a wireless communications technology to communicate with one another.

In the WLAN system, each STA includes a media access control (media access control, MAC) entity and a physical (physical, PHY) entity. The STA may be an access point (AP) STA or a non-AP (non-AP) STA. For ease of description, any two non-AP STAs are referred to as a first STA and a second STA respectively. A MAC entity and a PHY entity that are included in the first STA and a MAC entity and a PHY entity that are included in the second STA may set up a direct link between the first STA and the second STA. The first STA and the second STA may transmit data through the direct link.

In a process of implementing this application, the inventor finds that the conventional technology has at least the following disadvantages:
As an amount of data that needs to be transmitted in the WLAN system increases greatly, the direct link between the first STA and the second STA cannot meet requirements on high reliability and a high throughput of data transmission.

### SUMMARY

This application provides a method, an apparatus, and a system for setting up a direct link, and a method and an apparatus for sending a wireless local area network frame, to improve reliability and a throughput of data transmission. The technical solutions are as follows.

According to a first aspect, this application provides a method for setting up a direct link in a wireless local area network. According to the method, a first multi-link device sets up, based on parameters of a plurality of stations belonging to the first multi-link device and device information of a second multi-link device, at least one direct link between the first multi-link device and the second multi-link device. Each of the at least one direct link is connected to one of the plurality of stations belonging to the first multi-link device and one station belonging to the second multi-link device. In this way, at least one direct link is set up between two multi-link devices, and each of the at least one direct link may be used to transmit data between the two multi-link devices, to improve reliability and a throughput of data transmission.

In a possible implementation, the parameters of the plurality of stations belonging to the first multi-link device include an identifier and capability information of each of the plurality of stations, so that a station of the first multi-link device can be paired with a station of the second multi-link device based on the identifiers and the capability information of the plurality of stations, to set up a direct link between the two paired stations.

In another possible implementation, capabilities of stations at two ends of each of the at least one direct link correspond to each other. This can ensure that a direct link can be successfully set up between the stations at the two ends.

In another possible implementation, the first multi-link device sends a direct link discovery request message. The direct link discovery request message includes the parameters of the plurality of stations belonging to the first multi-link device and an address of the second multi-link device. The first multi-link device receives a direct link discovery response message sent by the second multi-link device. Because the direct link discovery request message includes the parameters of the plurality of stations, setup of the at least one direct link between the first multi-link device and the second multi-link device is supported.

In another possible implementation, the first multi-link device sends a direct link setup request message. The direct link setup request message includes the parameters of the plurality of stations belonging to the first multi-link device and the address of the second multi-link device. The first multi-link device receives a direct link setup response message. The direct link setup response message includes an indication indicating to allow setup of a direct link and a correspondence between the stations at the two ends of each of the at least one direct link. Because the direct link setup request message includes the parameters of the plurality of stations belonging to the first multi-link device and the direct link setup response message includes the correspondence between the stations at the two ends of each of the at least one direct link, setup of the at least one direct link between the first multi-link device and the second multi-link device is supported.

In another possible implementation, the direct link setup response message further includes a parameter of a station of the second multi-link device.

In another possible implementation, the first multi-link device sends a direct link setup request message. The direct link setup request message includes the parameters of the plurality of stations belonging to the first multi-link device and the address of the second multi-link device. The first multi-link device receives a direct link setup response message. The direct link setup response message includes an indication indicating to allow setup of a direct link and a parameter of a station of the second multi-link device. The first multi-link device sends a direct link setup confirm message. The direct link setup confirm message includes a correspondence between the stations at the two ends of each of the at least one direct link. Because the direct link setup request message includes the parameters of the plurality of stations belonging to the first multi-link device and the direct link setup response message includes the correspondence between the stations at the two ends of each of the at least one direct link, setup of the at least one direct link between the first multi-link device and the second multi-link device is supported. In addition, the first multi-link device sends the direct link setup confirm message, and the direct link setup confirm message includes the correspondence between the stations at the two ends of each of the at least one direct link. This can ensure that the at least one direct link can be successfully set up between the first multi-link device and the second multi-link device.

In another possible implementation, the first multi-link device sends a direct link discovery request message. The direct link discovery request message includes the parameters of the plurality of stations belonging to the first multi-link device and an address of the second multi-link device. The first multi-link device receives a direct link discovery response message sent by the second multi-link device. The direct link discovery response message includes a parameter of a station of the second multi-link device. Because the direct link discovery request message includes the parameters of the plurality of stations belonging to the first multi-link device and the direct link discovery response message includes the parameter of the station of the second multi-link device, setup of the at least one direct link between the first multi-link device and the second multi-link device is supported.

In another possible implementation, the first multi-link device sends a direct link setup request message. The direct link setup request message includes a correspondence between the stations at the two ends of each of the at least one direct link and the address of the second multi-link device. The first multi-link device receives a direct link setup response message. The direct link setup response message includes an indication indicating to allow setup of a direct link. Because the direct link setup request message includes the correspondence between the stations at the two ends of each of the at least one direct link, setup of the at least one direct link between the first multi-link device and the second multi-link device is supported.

In another possible implementation, the first multi-link device determines the correspondence between the stations at the two ends of each of the at least one direct link based on the parameters of the plurality of stations of the first multi-link device and the parameter of the station of the second multi-link device.

In another possible implementation, the first multi-link device sends a direct link setup teardown request message. The direct link setup teardown request message includes a link identifier set. The link identifier set includes identifiers of all or some of the at least one direct link. The direct link setup teardown request message is used to indicate the second multi-link device to tear down a direct link corresponding to an identifier of each direct link in the link identifier set. In this way, one direct link setup teardown request message may be used to tear down direct links in batches, to reduce a quantity of sent messages, and reduce occupation of network resources.

In another possible implementation, the first multi-link device sends a direct link peer traffic indication message. The direct link peer traffic indication information includes an identifier of each direct link in a first direct link set and a status of a service flow that is transmitted through each direct link in the first direct link set at a corresponding station in the first multi-link device. The first direct link set includes the at least one direct link or some of the at least one direct link. In this way, one direct link peer traffic indication message may be used to notify, in batches, statuses of service flows that are transmitted through direct links at corresponding stations in the first multi-link device, to reduce a quantity of sent messages, and reduce occupation of network resources.

In another possible implementation, the first multi-link device sends a direct link peer PSM request message. The direct link peer PSM request message includes an identifier of each direct link in a second direct link set and PSM information of each direct link in the second direct link set at a corresponding station in the first multi-link device. The second direct link set includes the at least one direct link or some of the at least one direct link. In this way, one direct link peer PSM request message may be used to notify, in batches, PSM information of direct links at corresponding stations in the first multi-link device, to reduce a quantity of sent messages, and reduce occupation of network resources.

In another possible implementation, the first multi-link device sends a direct link channel switch request message. The direct link channel switch request message includes an identifier of each direct link in a third direct link set and an identifier of a target channel corresponding to each direct link in the third direct link set. The direct link channel switch request message is used to indicate the second multi-link device to separately switch a channel occupied by each direct link in the third direct link set to the target channel corresponding to each direct link in the third direct link set. The third direct link set includes the at least one direct link or some of the at least one direct link. In this way, one direct link channel switch request message may be used to switch channels of direct links in batches, to reduce a quantity of sent messages, and reduce occupation of network resources.

According to a second aspect, this application provides a method for setting up a direct link in a wireless local area network. According to the method, a first multi-link device receives a direct link setup request message from a second multi-link device. The direct link setup request message includes parameters of a plurality of stations belonging to the second multi-link device. The first multi-link device includes one station. The first multi-link device selects one station from the plurality of stations based on the parameters of the plurality of stations and a parameter of the station. The first multi-link device sends a direct link setup response message to the second multi-link device. The direct link setup response message includes a correspondence between stations at two ends of a direct link to be set up. The correspondence is a correspondence between the station and the selected station. Because the first multi-link device selects the station from the plurality of stations based on the parameters of the plurality of stations and the parameter of the station, a direct link may also be set up between the first multi-link device including the station and the second multi-link device including the plurality of stations.

In a possible implementation, the first multi-link device selects, from the plurality of stations based on the parameters of the plurality of stations and the parameter of the station, one station whose capability corresponds to a capability of the station. This can ensure that a direct link can be successfully set up between the stations at the two ends.

According to a third aspect, this application provides a method for sending a wireless local area network WLAN frame. According to the method, a first multi-link device receives, by using a first access point AP, a first WLAN frame sent by a second multi-link device. The first AP belongs to the first multi-link device. A transmitter address of the first WLAN frame is an address of the second multi-link device. A destination address of the first WLAN frame is an address of a station. A receiver address of the first WLAN frame is an address of the first AP. The station belongs to a third multi-link device. The station is not associated with the first AP. The first multi-link device is an access point multi-link device. The second multi-link device and the third multi-link device are non-access point multi-link devices. The first multi-link device sends a second WLAN frame by using a second AP. The second AP belongs to the third multi-link device. A payload of the second WLAN frame is the same as a payload of the first WLAN frame. The station is associated with the second AP. A transmitter address of the second WLAN frame is an address of the second AP. A receiver address of the second WLAN frame is the address of the station. A source address of the second WLAN frame is the address of the second multi-link device.

Because the first AP configured to receive the first WLAN frame is different from the second AP associated with the station corresponding to the destination address, the first multi-link device may determine the second AP associated with the station, and send the second WLAN by using the second AP. In addition, because the payload of the second WLAN frame is the same as the payload of the first WLAN frame, content of a payload part of the first WLAN frame can be sent to the second multi-link device.

In another possible implementation, the first WLAN frame is a direct link setup request message, a direct link setup response message, a direct link setup confirm message, a direct link discovery request message, or a direct link discovery response message that is used to set up at least one direct link between the second multi-link device and the third multi-link device.

According to a fourth aspect, this application provides an apparatus for setting up a direct link in a wireless local area network, configured to perform the method according to any one of the first aspect or the possible implementations of the first aspect. Specifically, the apparatus includes a unit configured to perform the method according to any one of the first aspect or the possible implementations of the first aspect.

According to a fifth aspect, this application provides an apparatus for setting up a direct link in a wireless local area network, configured to perform the method according to any one of the second aspect or the possible implementations of the second aspect. Specifically, the apparatus includes a unit configured to perform the method according to any one of the second aspect or the possible implementations of the second aspect.

According to a sixth aspect, this application provides an apparatus for sending a wireless local area network WLAN frame, configured to perform the method according to any one of the third aspect or the possible implementations of the third aspect. Specifically, the apparatus includes a unit configured to perform the method according to any one of the third aspect or the possible implementations of the third aspect.

According to a seventh aspect, this application provides an apparatus for setting up a direct link in a wireless local area network. The apparatus includes a processor, a memory, and a transceiver. The processor, the memory, and the transceiver may be connected by using a bus system. The memory is configured to store one or more programs, and the processor is configured to execute the one or more programs in the memory, so that the apparatus implements the method according to any one of the first aspect or the possible implementations of the first aspect.

According to an eighth aspect, this application provides an apparatus for setting up a direct link in a wireless local area network. The apparatus includes a processor, a memory, and a transceiver. The processor, the memory, and the transceiver may be connected by using a bus system. The memory is configured to store one or more programs, and the processor is configured to execute the one or more programs in the memory, so that the apparatus implements the method according to any one of the second aspect or the possible implementations of the second aspect.

According to a ninth aspect, this application provides an apparatus for sending a wireless local area network WLAN frame. The apparatus includes a processor, a memory, and a transceiver. The processor, the memory, and the transceiver may be connected by using a bus system. The memory is configured to store one or more programs, and the processor is configured to execute the one or more programs in the memory, so that the apparatus implements the method according to any one of the third aspect or the possible implementations of the third aspect.

According to a tenth aspect, this application provides a computer-readable storage medium. The computer-readable storage medium stores program code. When the program code is run on a multi-link device, the multi-link device is enabled to perform the method according to any one of the first aspect, the second aspect, the third aspect, the possible implementations of the first aspect, the possible implementations of the second aspect, or the possible implementations of the third aspect.

According to an eleventh aspect, this application provides a computer program product including program code. When the computer program product runs on a multi-link device, the multi-link device is enabled to perform the method according to any one of the first aspect, the second aspect, the third aspect, the possible implementations of the first aspect, the possible implementations of the second aspect, or the possible implementations of the third aspect.

According to a twelfth aspect, this application provides a system for setting up a direct link in a wireless local area network. The system includes the apparatus according to the fourth aspect, the apparatus according to the fifth aspect, and the apparatus according to the sixth aspect. Alternatively, the system includes the apparatus according to the seventh aspect, the apparatus according to the eighth aspect, and the apparatus according to the ninth aspect.

### BRIEF DESCRIPTION OF DRAWINGS

FIG. 1 is a schematic diagram of a structure of a WLAN according to an embodiment of this application;
FIG. 2 is a schematic diagram of a structure of a multi-link device according to an embodiment of this application;
FIG. 3 is a schematic diagram of a structure of another multi-link device according to an embodiment of this application;
FIG. 4 is a schematic diagram of a structure of still another multi-link device according to an embodiment of this application;
FIG. 5 is a schematic diagram of a structure of yet another multi-link device according to an embodiment of this application;
FIG. 6 is a flowchart of a method for setting up a direct link in a wireless local area network according to an embodiment of this application;
FIG. 7 is a schematic diagram of a first structure of a direct link setup request message according to an embodiment of this application;
FIG. 8 is a schematic diagram of a second structure of a direct link setup request message according to an embodiment of this application;
FIG. 9 is a schematic diagram of a first structure of a direct link discovery request message according to an embodiment of this application;
FIG. 10 is a schematic diagram of a second structure of a direct link discovery request message according to an embodiment of this application;
FIG. 11 is a schematic diagram of a structure of a direct link discovery response message according to an embodiment of this application;
FIG. 12 is a schematic diagram of a first structure of a direct link setup response message according to an embodiment of this application;
FIG. 13 is a schematic diagram of a second structure of a direct link setup response message according to an embodiment of this application;
FIG. 14 is a schematic diagram of a first structure of a direct link setup confirm message according to an embodiment of this application;
FIG. 15 is a schematic diagram of a second structure of a direct link setup confirm message according to an embodiment of this application;
FIG. 16 is a schematic diagram of a structure of a direct link setup teardown request message according to an embodiment of this application;
FIG. 17 is a schematic diagram of a structure of a direct link peer traffic indication message according to an embodiment of this application;
FIG. 18 is a schematic diagram of a structure of a direct link peer PSM message according to an embodiment of this application;
FIG. 19 is a schematic diagram of a structure of a direct link channel switch request message according to an embodiment of this application;
FIG. 20 is a schematic diagram of a structure of an apparatus for setting up a direct link in a wireless local area network according to an embodiment of this application;
FIG. 21 is a schematic diagram of a structure of another apparatus for setting up a direct link in a wireless local area network according to an embodiment of this application;
FIG. 22 is a schematic diagram of a structure of still another apparatus for setting up a direct link in a wireless local area network according to an embodiment of this application;
FIG. 23 is a schematic diagram of a structure of yet another apparatus for setting up a direct link in a wireless local area network according to an embodiment of this application;
FIG. 24 is a schematic diagram of a structure of still yet another apparatus for setting up a direct link in a wireless local area network according to an embodiment of this application; and
FIG. 25 is a schematic diagram of a structure of a further apparatus for setting up a direct link in a wireless local area network according to an embodiment of this application.

### DESCRIPTION OF EMBODIMENTS

The following further describes in detail embodiments of this application with reference to accompanying drawings.

Embodiments of this application are applied to a WLAN. The WLAN includes a plurality of multi-link devices. The plurality of multi-link devices are classified into two types. A multi-link device of a first type is an access point multi-link device, and the multi-link device of the first type includes a plurality of APs. A multi-link device of a second type is a non-access point multi-link device, and the multi-link device of the second type includes a plurality of stations. Any AP in the multi-link device of the first type may be associated with one station in the multi-link device of the second type.

Optionally, there is at least one link between the multi-link device of the first type and the multi-link device of the second type, and each link connects one AP on the multi-link device of the first type and one station on the multi-link device of the second type. A relationship between the AP and the station at two ends of each link is association.

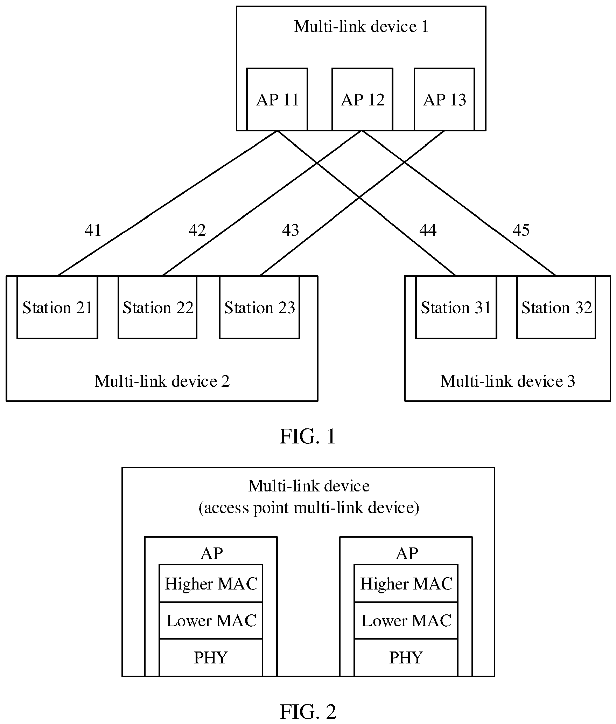

For example, as shown in FIG. 1, the WLAN includes a multi-link device 1, a multi-link device 2, and a multi-link device 3. The multi-link device 1 is an access point multi-link device, that is, the multi-link device 1 is a multi-link device of the first type. The multi-link device 2 and the multi-link device 3 are non-access point multi-link devices, that is, the multi-link device 2 and the multi-link device 3 are multi-link devices of the second type. The multi-link device 1 includes an AP 11, an AP 12, and an AP 13. The multi-link device 2 includes a station 21, a station 22, and a station 23. The multi-link device 3 includes a station 31 and a station 32.

There are three links between the multi-link device 1 and the multi-link device 2, and the three links are separately a link 41, a link 42, and a link 43. The link 41 is used to connect the AP 11 on the multi-link device 1 to the station 21 on the multi-link device 2, the link 42 is used to connect the AP 12 on the multi-link device 1 to the station 22 on the multi-link device 2, and the link 43 is used to connect the AP 13 on the multi-link device 1 to the station 23 on the multi-link device 2. To be specific, the AP 11 is associated with the station 21, the AP 12 is associated with the station 22, and the AP 13 is associated with the station 23.

There are two links between the multi-link device 1 and the multi-link device 3, and the two links are separately a link 44 and a link 45. The link 44 is used to connect the AP 11 on the multi-link device 1 to the station 31 on the multi-link device 3, and the link 45 is used to connect the AP 12 on the multi-link device 1 to the station 32 on the multi-link device 3. To be specific, the AP 11 is associated with the station 31, and the AP 12 is associated with the station 32.

Optionally, each AP on the multi-link device of the first type supports a different band, and each station on the multi-link device of the second type supports a different band.

Optionally, for an AP and a station that are associated, a band supported by the AP is the same as a band supported by the station.

Optionally, for an AP and a station that are associated, a link between the AP and the station may be set up on a band supported by the AP and the station.

Optionally, the band is a 2.4 GHz band, a 3.6 GHz band, a 4.9 GHz band, a 5 GHz band, a 60 GHz band, a 6 GHz band, or the like.

FIG. 1 is still used as an example, the AP 11, the AP 12, and the AP 13 in the multi-link device 1 respectively correspond to the 2.4 GHz band, the 3.6 GHz band, and the 4.9 GHz band. The station 21, the station 22, and the station 23 in the multi-link device 2 respectively correspond to the 2.4 GHz band, the 3.6 GHz band, and the 4.9 GHz band. The station 31 and the station 32 in the multi-link device 3 respectively correspond to the 2.4 GHz band and the 3.6 GHz band.

The link 41 between the AP 11 and the station 21 is a link set up on the 2.4 GHz band. The link 42 between the AP 112 and the station 22 is a link set up on the 3.6 GHz band. The link 43 between the AP 13 and the station 23 is a link set up on the 4.9 GHz band. The link 44 between the AP 11 and the station 31 is a link set up on the 2.4 GHz band. The link 45 between the AP 12 and the station 32 is a link set up on the 3.6 GHz band.

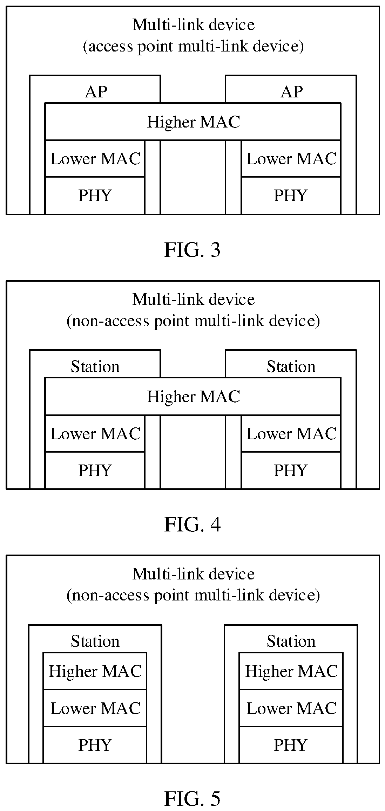

Optionally, as shown in FIG. 2 or FIG. 3, PHY entities of APs in a multi-link device of the first type are independent of each other, and lower MAC entities of the APs are also independent of each other. Optionally, as shown in FIG. 2, higher MAC entities of the APs are also independent of each other. Alternatively, as shown in FIG. 3, the APs share a higher MAC entity.

Optionally, as shown in FIG. 4 or FIG. 5, PHY entities of stations in a multi-link device of the second type are independent of each other, and lower MAC entities of the stations are also independent of each other. Optionally, as shown in FIG. 5, higher MAC entities of the stations are also independent of each other. Alternatively, as shown in FIG. 4, the stations share a higher MAC entity.

Optionally, the multi-link device 3 may alternatively include one station, but the multi-link device 3 supports a tunneled direct link setup (tunneled direct link setup, TDLS).

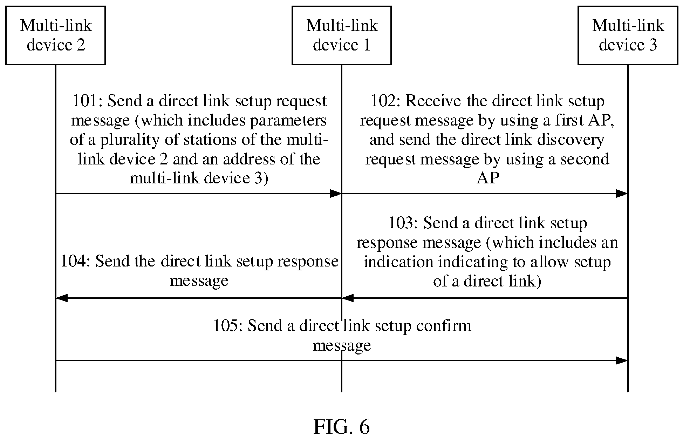

As shown in FIG. 6, an embodiment of this application provides a method for setting up a direct link in a WLAN. The method may be applied to the WLAN shown in FIG. 1, and is used to set up at least one direct link between two multi-link devices of the second type, that is, set up at least one direct link between the multi-link device 2 and the multi-link device 3 in the WLAN shown in FIG. 1. The method includes the following steps.

Step 101: The multi-link device 2 sends a direct link setup request (TDLS Setup Request) message, where the direct link setup request message includes parameters of a plurality of stations belonging to the multi-link device 2 and an address of the multi-link device 3.

The parameters of the plurality of stations in the multi-link device 2 include an identifier and capability information of each of the plurality of stations. In other words, for any one of the plurality of stations, a parameter of the station includes an identifier and capability information of the station.

Optionally, the identifier of the station is a MAC address of the station, an identifier allocated by a WLAN system to the station, or the like.

Optionally, the capability information of the station includes a band supported by the station, and the like.

Optionally, the parameter of the station further includes at least one of an identifier of an AP associated with the station, channel information of the station, and the like.

Optionally, the channel information of the station includes a primary channel number, a bandwidth value, and the like of the station.

In this step, the multi-link device 2 sends the direct link setup request message to the multi-link device 1 by using a first station. The first station is one station in the multi-link device 1.

Optionally, a transmitter address of the direct link setup request message is an address of the first station, a destination address is an address of the multi-link device 3, and a receiver address is an address of a first AP. The first AP is one AP in the multi-link device 1, and the first AP is associated with the first station, that is, there is a link between the first AP and the first station.

Optionally, the direct link setup request message is a WLAN frame, and the transmitter address, the destination address, and the receiver address are located in a frame header of the direct link setup request message.

Optionally, the address of the multi-link device 3 may be a device address of the multi-link device 3 or an address of a second station, and the second station is one station in the multi-link device 3.

Optionally, the device address of the multi-link device 3 is a MAC address, an internet protocol (Internet Protocol, IP) address, or the like of the multi-link device 3. The address of the first station may be a MAC address, an IP address, or the like of the first station. The address of the second station may be a MAC address or an IP address of the second station. The address of the first AP may be a MAC address, an IP address, or the like of the first AP.

Optionally, the parameters of the plurality of stations belonging to the multi-link device 2 may be located in a payload of the direct link setup request message.

Optionally, before sending the direct link setup request message, the multi-link device 2 may obtain the address of the multi-link device 3 from an upper-layer application. For example, the multi-link device 2 may obtain, on an input interface, the address of the multi-link device 3 that is input to the input interface. For another example, the multi-link device 2 may scan, by using a code scanning application, a graphic code including the address of the multi-link device 3, to obtain the address of the multi-link device 3.

Optionally, the direct link setup request message includes a correspondence between stations at two ends of each of the at least one direct link to be set up. The at least one direct link to be set up is a direct link to be set up between the multi-link device 2 and the multi-link device 3. For any one of the at least one direct link, a station at one end of the direct link is one station in the multi-link device 2, and a station at the other end of the direct link is one station in the multi-link device 3. The correspondence between the stations at the two ends of the direct link includes a parameter of the station at one end of the direct link and an identifier of the station at the other end of the direct link.

Optionally, capabilities of the stations at the two ends of each of the at least one direct link correspond to each other. That the capabilities of the stations at the two ends correspond to each other means that the capabilities of the stations at the two ends overlap. For example, for any direct link, a band supported by a station at one end of the direct link is the same as a band supported by a station at the other end of the direct link or overlaps a band supported by a station at the other end of the direct link. Alternatively, there is an intersection set between a protocol number supported by a station at one end of the direct link and a protocol number supported by a station at the other end of the direct link.

For example, as shown in FIG. 1, it is assumed that the direct links to be set up include a direct link 1 between the station 21 in the multi-link device 2 and the station 31 in the multi-link device 3 and a direct link 2 between the station 22 in the multi-link device 2 and the station 32 in the multi-link device 3. The direct link setup request message includes a correspondence between stations at two ends of the direct link 1 and a correspondence between stations at two ends of the direct link 2. The correspondence between the stations at the two ends of the direct link 1 includes a parameter of the station 21 and an identifier of the station 31. The correspondence between the stations at the two ends of the direct link 2 includes a parameter of the station 22 and an identifier of the station 32.

Optionally, when the direct link setup request message includes the correspondence between the stations at the two ends of each of the at least one direct link, the multi-link device 2 further obtains a parameter of at least one station in the multi-link device 3, and determines the correspondence between the stations at the two ends of each of the at least one direct link based on the parameters of the plurality of stations in the multi-link device 2 and the parameter of the at least one station in the multi-link device 3.

Optionally, the multi-link device 2 may obtain the parameter of the at least one station in the multi-link device 3 in a device discovery process. A detailed implementation of the device discovery process is described in detail in subsequent content, and is not described in detail herein.

Optionally, in this step, the following two structures of the direct link setup request message are provided. The two structures are respectively as follows.

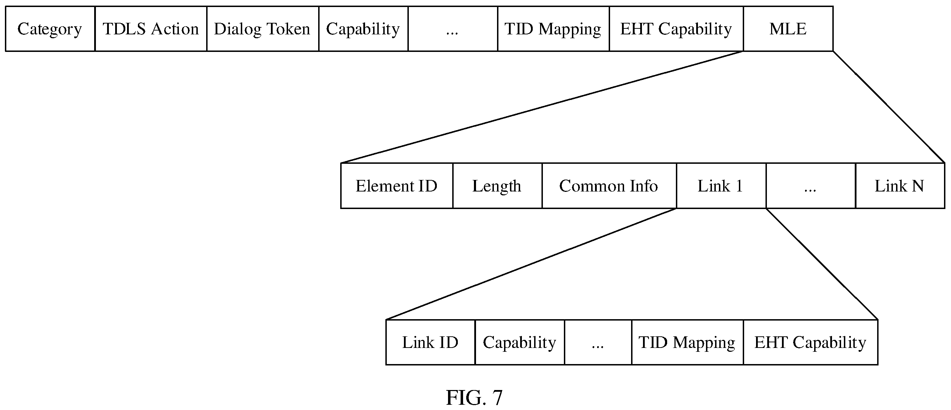

Refer to a first structure of the direct link setup request message shown in FIG. 7. In the first structure, the payload of the direct link setup request message includes a category (Category) field, a TDLS action (TDLS Action) field, a dialog token (Dialog Token) field, a capability (Capability) field, a traffic identifier mapping (traffic identifier, TID Mapping) field, an extremely high throughput capability (extremely high throughput capability, EHT Capability) field, a multiple link element (multiple link element, MLE) field, and the like.

The TID Mapping field and the EHT Capability field are new fields.

The TID Mapping field and the EHT Capability field include a parameter of the first station. Optionally, the TID Mapping field includes an identifier of the first station, and the EHT Capability field includes capability information of the first station.

When the direct link setup request message includes the correspondence between the stations at the two ends of each of the at least one direct link, the first station is a station at one end of the direct link, and the TID Mapping field further includes an identifier of a station at the other end of the direct link. The station at the other end of the direct link is a station in the multi-link device 3.

The MLE field in the direct link setup request message includes a parameter of each of the plurality of stations other than the first station.

The direct link setup request message of the first structure shown in FIG. 7 is obtained by adding the MLE field to a current direct link setup request message.

Still as shown in FIG. 7, the MLE field in the direct link setup request message includes an element identifier (Element ID) field, a length (Length) field, a common information (Common Info) field, and a link (Link) field corresponding to each of the other stations. The Element ID field includes an identifier of the MLE field. The Length field includes a length of the MLE field. The Common Info field includes common information in parameters of all the other stations. For each of the other stations, a Link field corresponding to the other station includes other information in the parameter of the other station other than the common information.

Optionally, when the direct link setup request message includes the correspondence between the stations at the two ends of each of the at least one direct link, the other station is a station at one end of the direct link, and the Link field corresponding to the other station further includes an identifier of a station at the other end of the direct link.

Still as shown in FIG. 7, the Link field corresponding to the other station includes a link identifier (Link ID) field, a Capability field, a TID Mapping field, and an EHT Capability field. The Link ID field includes an identifier of the other station, and the Capability field, the TID Mapping field, and the EHT Capability field include other parameters of the other station. Optionally, the TID Mapping field further includes the identifier of the station at the other end of the direct link.

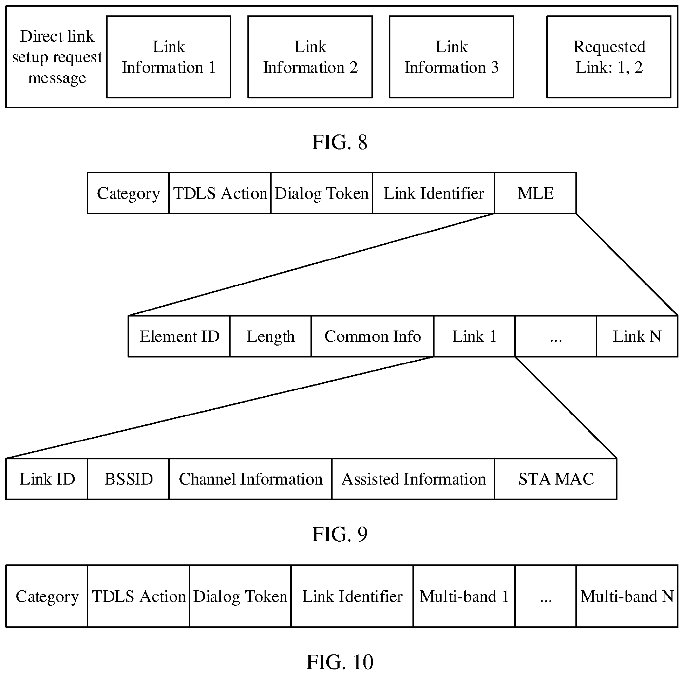

Refer to a second structure of the direct link setup request message shown in FIG. 8. In the second structure, the direct link setup request message includes a link information (Link Info) field corresponding to each of the plurality of stations belonging to the multi-link device 2. The Link Info field corresponding to each station separately includes a parameter of each station.

Optionally, when the direct link setup request message includes the correspondence between the stations at the two ends of each of the at least one direct link, for each of the plurality of stations, the station is a station at one end of the direct link, and the Link Info field corresponding to the station further includes an identifier of a station at the other end of the direct link.

Optionally, as shown in FIG. 8, the direct link setup request message further includes a requested link (Requested Link) field. The Requested Link field includes an identifier of a Link field corresponding to a station that needs to set up a direct link and that is in the multi-link device 2.

Optionally, before performing this step, the multi-link device 2 discovers the multi-link device 3 in the device discovery process. The device discovery process includes the following Step 11 to Step 15.

Step 11: The multi-link device 2 sends a direct link discovery request (TDLS Discovery Request) message to the multi-link device 1, where the direct link discovery request message includes the parameters of the plurality of stations belonging to the multi-link device 2 and the address of the multi-link device 3.

Optionally, for each of the plurality of stations of the multi-link device 2, a parameter of the station in the direct link discovery request message may further include assisted information. The assisted information includes a beacon interval of the station, and the like.

In this step, the multi-link device 2 sends the direct link discovery request message to the multi-link device 1 by using the first station, where the first station is one station in the multi-link device 1.

Optionally, the direct link discovery request message is a WLAN frame, a transmitter address of the direct link discovery request message is the address of the first station, a destination address is the address of the multi-link device 3, and a receiver address is the address of the first AP.

The transmitter address, the destination address, and the receiver address are all located in a frame header of the direct link discovery request message.

Optionally, the address of the multi-link device 3 may be a device address of the multi-link device 3 or an address of a second station.

For example, as shown in FIG. 1, the multi-link device 2 sends the direct link discovery request message by using the station 21, and the station 21 is the first station. The transmitter address of the direct link discovery request message is an address of the station 11, the receiver address is an address of the AP 11, the destination address is an address of the station 31, and the station 31 is the second station.

Optionally, in this step, the following two structures of the direct link discovery request message are provided. The two structures are respectively as follows.

Refer to a first structure of the direct link discovery request message shown in FIG. 9. In the first structure, a payload of the direct link discovery request message includes a Category field, a TDLS Action field, a Dialog Token field, a link identifier (Link Identifier) field, and an MLE field.

The Category field, the TDLS Action field, the Dialog Token field, and the Link Identifier field include a parameter of the first station, and the MLE field includes a parameter of each of the plurality of stations other than the first station.

The direct link discovery request message of the first structure shown in FIG. 9 is obtained by adding the MLE field to a current direct link discovery request message.

Still as shown in FIG. 9, the MLE field includes an Element ID field, a Length field, a Common Info field, and a Link field corresponding to each of the other stations. The Element ID field includes an identifier of the MLE field. The Length field includes a length of the MLE field. The Common Info field includes common information in parameters of all the other stations. For each of the other stations, a Link field corresponding to the other station includes other information in the parameter of the other station other than the common information.

Still as shown in FIG. 9, the Link field corresponding to the other station includes a Link ID field, a basic service set identifier (basic service set identify, BSSID) field, a channel information (Channel Information) field, an assisted information (Assisted Information) field, and a station media access control (STA MAC) field. The Link ID field includes an identifier of the other station. The BSSID field includes an identifier of an AP associated with the other station. The Channel Information field includes channel information of the other station. The Assisted Information field includes assisted information of the other station. The STA MAC field includes a MAC address of the other station.

Refer to a second structure of the direct link discovery request message shown in FIG. 10. In the second structure, a payload of the direct link discovery request message includes a Category field, a TDLS Action field, a Dialog Token field, a Link Identifier field, and at least one multi-band (Multi-band) field.

The Category field, the TDLS Action field, the Dialog Token field, and the Link Identifier field include the parameter of the first station. For each of the plurality of stations other than the first station, the other station corresponds to one Multi-band field, and the Multi-band field corresponding to the other station includes a parameter of the other station.

The Multi-band field corresponding to the other station includes a band identifier value (Band ID value) field. The Band ID value field includes a primary channel number of the other station. The primary channel number is used to identify a channel occupied by the other station. Currently, there is no primary channel number corresponding to a 6 GHz band. In this embodiment of this application, a primary channel number corresponding to the 6 GHz band is defined.

For example, as shown in the following Table 1, different values of the Band ID value field represent different primary channel numbers, and each primary channel number is used to identify one type of channel. In this embodiment of this application, the primary channel number corresponding to the 6 GHz band is defined as 6.

**Table 1**

| Band ID value (primary channel number) | Channel (band) |
|---|---|
| 0 | TV white spaces |
| 1 | Sub-1 GHz |
| 2 | 2.4 GHz |
| 3 | 3.6 GHz |
| 4 | 4.9 GHz and 5 GHz |
| 5 | 60 GHz |
| 6 | 6 GHz |

Step 12: The multi-link device 1 receives the direct link discovery request message by using the first AP, and sends the direct link discovery request message to the multi-link device 3 by using a second AP.

Both the first AP and the second AP are APs in the multi-link device 1. The first AP is associated with the first station, and the second AP is associated with one station in the multi-link device 3.

A payload of the direct link discovery request message sent by the multi-link device 1 by using the second AP is the same as the payload of the direct link discovery request message received by using the first AP. A transmitter address of the direct link discovery request message sent by using the second AP is an address of the second AP, a receiver address is an address of a station associated with the second AP, and a source address is an address of the multi-link device 1 (a device address of the multi-link device 1 or the address of the first station).

Optionally, there are the following two cases for the destination address of the direct link discovery request message received by the multi-link device 1. The two cases are respectively as follows.

In a first case, the destination address of the direct link discovery request message received by the multi-link device 1 is the address of the second station, and the second AP may be an AP associated with the second station, or may not be an AP associated with the second station. The first AP and the second AP may be a same AP, or may be different APs.

In the first case, this step may be as follows: The multi-link device 1 receives the direct link discovery request message by using the first AP associated with the first station, determines the second AP based on the address of the second station, and sends the direct link discovery request message to the multi-link device 3 by using the second AP.

Optionally, the multi-link device 1 may determine the second AP in the following three manners. The three manners are respectively as follows.

In a first manner, the multi-link device 1 selects, based on the address of the second station, an AP associated with the second station as the second AP.

For example, as shown in FIG. 1, the multi-link device 1 receives, by using the AP 11, the direct link discovery request message sent by the multi-link device 2 by using the first station 21. The destination address of the direct link discovery request message is the address of the station 31, that is, the station 31 is the second station. The multi-link device 1 selects the AP 11 associated with the second station 31 as the second AP, and sends the direct link discovery request message by using the second AP 11.

In a second manner, the multi-link device 1 determines whether an AP associated with the first station and an AP associated with the second station are a same AP, and selects the AP as the second AP if the APs are the same AP. To be specific, an AP associated with both the first station and the second station is selected as the second AP.

For example, as shown in FIG. 1, the multi-link device 1 receives, by using the AP 11, the direct link discovery request message sent by the multi-link device 2 by using the first station 21. The destination address of the direct link discovery request message is the address of the station 31, that is, the station 31 is the second station. The multi-link device 1 determines that the AP 1 associated with the first station 21 and the AP 11 associated with the second station 31 are the same AP, selects the AP 11 as the second AP, and sends the direct link discovery request message by using the second AP 11.

In a third manner, the multi-link device 1 selects an AP associated with both one station in the multi-link device 2 and one station in the multi-link device 3 as the second AP.

In the third manner, the second AP may be the same as or different from the first AP. For example, still as shown in FIG. 1, the multi-link device 1 receives, by using the AP 11, the direct link discovery request message sent by the multi-link device 2 by using the first station 21, and selects the AP 11 associated with both the station 21 in the multi-link device 2 and the station 31 in the multi-link device 3 as the second AP, or selects the AP 12 associated with both the station 22 in the multi-link device 2 and the station 32 in the multi-link device 3 as the second AP.

In a second case, the destination address of the direct link discovery request message received by the multi-link device 1 is the device address of the multi-link device 3, and the first AP and the second AP may be a same AP, or may be different APs.

In the second case, this step may be as follows: The multi-link device 1 determines, based on the device address of the multi-link device 3, an AP associated with each station in the multi-link device 3, selects one AP from the determined APs as the second AP, and sends the direct link discovery request message to the multi-link device 3 by using the second AP.

Optionally, the determined APs include an AP associated with the first station, and the multi-link device 1 selects, from the determined APs, the AP associated with the first station as the second AP. If the determined APs do not include the AP associated with the first station, the multi-link device 1 randomly selects an AP, selects an AP with minimum load, or selects an AP with most idle network resources from the determined APs as the second AP.

Step 13: The multi-link device 3 receives the direct link discovery request message, and sends a direct link discovery response (TDLS Discovery Response) message to the multi-link device 1.

Optionally, the direct link discovery response message includes a parameter of at least one station belonging to the multi-link device 3.

In this step, the multi-link device 3 receives the direct link discovery request message by using the second station associated with the second AP, and sends the direct link discovery response message by using the second station.

Optionally, the direct link discovery response message is a WLAN frame. A frame header of the direct link discovery response message includes that a transmitter address is the address of the second station, a receiver address is the address of the second AP associated with the second station, and a destination address is the address of the first station.

Optionally, the multi-link device 3 may alternatively directly send the direct link discovery response message to the multi-link device 1. In this way, Step 14 does not need to be performed, and Step 15 is directly performed.

Optionally, when the direct link discovery response message includes the parameter of the at least one station belonging to the multi-link device 3, an MLE field may be added to the direct link discovery response message. The MLE field includes the parameter of the at least one station belonging to the multi-link device 3.

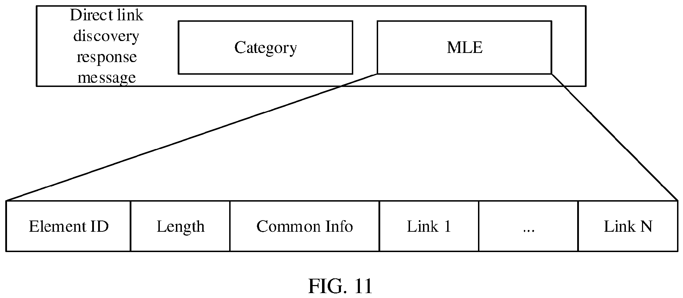

Refer to a structure of the direct link discovery response message shown in FIG. 11. The MLE field includes an Element ID field, a Length field, a Common Info field, and a Link field corresponding to each of the at least one station.

The Element ID field includes an identifier of the MLE field. The Length field includes a length of the MLE field. The Common Info field includes common information in parameters of all the at least one station. The Link field corresponding to each station separately includes other information in the parameter of each station other than the common information.

Step 14: The multi-link device 1 receives the direct link discovery response message, and sends the direct link discovery response message to the multi-link device 2.

Optionally, for a detailed implementation process in which the multi-link device 1 sends the direct link discovery response message to the multi-link device 2, refer to the detailed implementation process in which the multi-link device 1 sends the direct link discovery request message to the multi-link device 3 in the foregoing Step 12. Details are not described herein again.

Step 15: The multi-link device 2 receives the direct link discovery response message.

When the direct link discovery response message includes the parameter of the at least one station in the multi-link device 3, the multi-link device 2 obtains the parameter of the at least one station in the multi-link device 3 from the direct link discovery response message.

Step 102: The multi-link device 1 receives the direct link setup request message by using the first AP, and sends the direct link discovery request message to the multi-link device 3 by using the second AP.

A payload of the direct link setup request message sent by the multi-link device 1 by using the second AP is the same as the payload of the direct link setup request message received by using the first AP. A transmitter address of the direct link setup request message sent by using the second AP is the address of the second AP, a receiver address is the address of the second station associated with the second AP, and a source address is the address of the multi-link device 1 (the device address of the multi-link device 1 or the address of the first station).

Optionally, for a detailed implementation process in which the multi-link device 1 sends the direct link setup request message to the multi-link device 3, refer to the detailed implementation process in which the multi-link device 1 sends the direct link setup request message to the multi-link device 3 in the foregoing Step 12. Details are not described herein again.

Step 103: The multi-link device 3 receives the direct link setup request message, and sends a direct link setup response message, where the direct link setup response message includes an indication indicating to allow setup of a direct link.

Optionally, the multi-link device 3 sends the direct link setup response message by using the second station. A transmitter address of the direct link setup response message is the address of the second station, a destination address is the address of the first station, and a receiver address is the address of the second AP.

This step may be implemented in the following three manners. The three manners are respectively as follows.

Manner 1: When the direct link setup request message includes the parameters of the plurality of stations belonging to the multi-link device 2 and the address of the multi-link device 3, the multi-link device 3 determines, based on the parameters of the plurality of stations of the multi-link device 2 and the parameter of the at least one station of the multi-link device 3, the correspondence between the stations at the two ends of each of at least one direct link to be set up between the multi-link device 2 and the multi-link device 3, and sends the direct link setup response message. The direct link setup response message includes the indication indicating to allow setup of the direct link and the correspondence between the stations at the two ends of each of the at least one direct link.

Optionally, for each station in the multi-link device 3, the multi-link device 3 selects one station from the plurality of stations in the multi-link device 2 based on the parameter of the station and the parameters of the plurality of stations in the multi-link device 2, to obtain a correspondence between stations at two ends of a direct link. The correspondence is a correspondence between the station and the selected station.

Optionally, the multi-link device 3 selects, from the plurality of stations in the multi-link device 2 based on the parameters of the plurality of stations in the multi-link device 2 and the parameter of the station, one station whose capability corresponds to a capability of the station.

Optionally, in this step, there may be only one station in the multi-link device 3, and the direct link response message includes a correspondence between stations at two ends of a direct link. Alternatively, there may be a plurality of stations in the multi-link device 3, and the direct link response message includes a correspondence between stations at two ends of each of at least one direct link.

Optionally, the direct link setup response message further includes the parameter of the station in the multi-link device 3.

Optionally, the indication indicating to allow setup of the direct link includes an allowing indication for each of the at least one direct link.

Optionally, in this step, the following two structures of the direct link setup response message are provided. The two structures are respectively as follows.

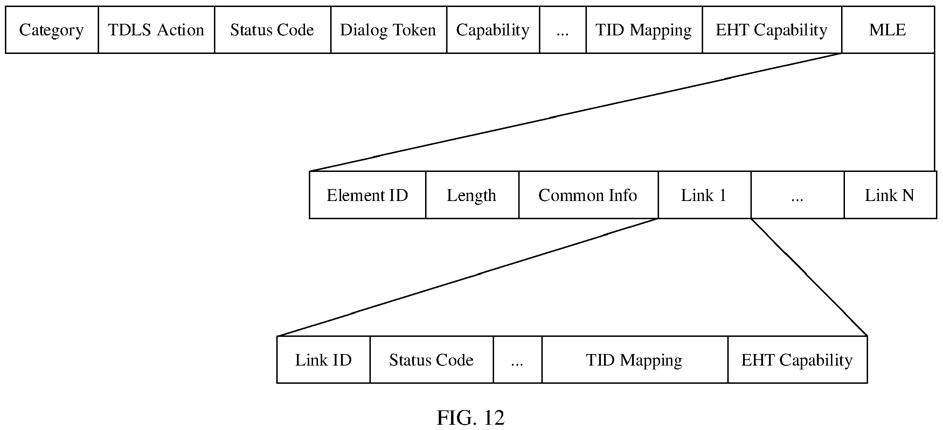

Refer to a first structure of the direct link setup response message shown in FIG. 12. In the first structure, a payload of the direct link setup response message includes a Category field, a TDLS Action field, a status code (Status Code) field, a Dialog Token field, a Capability field, and a TID Mapping field, an EHT Capability field and an MLE field.

The Status Code field includes an allowing indication for a direct link corresponding to the second station, and the second station is a station at one end of the direct link. The TID Mapping field and the EHT Capability field include a parameter of the second station and an identifier of a station at the other end of the direct link.

The MLE field includes a parameter of each of the at least one station in the multi-link device 3 other than the second station, an allowing indication for a direct link corresponding to each of the other stations, and the identifier of the other station.

The direct link setup response message of the first structure shown in FIG. 12 is obtained by adding the MLE field to a current direct link setup response message.

Still as shown in FIG. 12, the MLE field includes an Element ID field, a Length field, a Common Info field, and a Link field corresponding to each of the other stations. The Element ID field includes an identifier of the MLE field. The Length field includes a length of the MLE field. The Common Info field includes common information in parameters of all the other stations. For each of the other stations, the other station corresponds to one direct link. The other station is a station at one end of the direct link. A Link field corresponding to the other station includes other information in the parameter of the other station other than the common information, an allowing indication for the direct link and an identifier of a station at the other end of the direct link.

Still as shown in FIG. 12, the Link field corresponding to the other station includes a Link ID field, a Status Code field, a Capability field, a TID Mapping field, and an EHT Capability field. The Link ID field includes an identifier of the other station. The Status Code field includes an allowing indication for the direct link corresponding to the other station. The Capability field, the TID Mapping field, and the EHT Capability field include another parameter of the other station and the identifier of the station at the other end of the direct link.

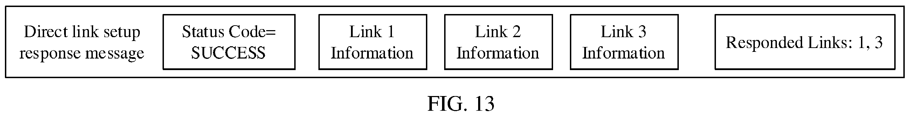

Refer to a second structure of the direct link setup response message shown in FIG. 13. In the second structure, the direct link setup response message includes a Status Code field, a Link Info field that corresponds to each of the at least one station in the multi-link device 3, and a responded links (Responded Links) field. The Status Code field includes the indication indicating to allow setup of the direct link. For each station, the station corresponds to one direct link, the station is a station at one end of the direct link, and a Link Info field corresponding to the station separately includes a parameter of the station and an identifier of a station at the other end of the direct link. The Responded Links field includes an identifier of a Link Info field corresponding to a station that successfully sets up a direct link.

Manner 2: When the direct link setup request message includes the parameters of the plurality of stations belonging to the multi-link device 2 and the address of the multi-link device 3, the multi-link device 3 sends the direct link setup response message. The direct link setup response message includes the indication indicating to allow setup of the direct link and the parameter of the station in the multi-link device 3.

Manner 3: When the direct link setup request message includes the correspondence between the stations at the two ends of each of at least one direct link to be set up, the multi-link device 3 determines, based on the correspondence between the stations at the two ends of each direct link, to allow setup of each direct link, and sends the direct link setup response message. The direct link setup response message includes the indication indicating to allow setup of the direct link.

In Manner 3, after the multi-link device 3 determines, based on the correspondence between the stations at the two ends of each direct link, to allow setup of each direct link, setup of the at least one direct link between the multi-link device 2 and the multi-link device 3 is completed.

Step 104: The multi-link device 1 receives the direct link setup response message, and sends the direct link setup response message to the multi-link device 2.

Optionally, for a detailed implementation process in which the multi-link device 1 sends the direct link setup response message to the multi-link device 2, refer to the detailed implementation process in which the multi-link device 1 sends the direct link discovery request message to the multi-link device 3 in the foregoing Step 12. Details are not described herein again.

Step 105: The multi-link device 2 receives the direct link setup response message, and sends a direct link setup confirm message.

The operation of sending the direct link setup confirm message by the multi-link device 2 is an optional operation, that is, the multi-link device 2 may send the direct link setup confirm message, or may not send the direct link setup confirm message. Details are as follows.

Optionally, when the direct link setup response message is sent by the multi-link device 3 in the foregoing Manner 1, the direct link setup response message includes the indication indicating to allow setup of the direct link and the correspondence between the stations at the two ends of each of the at least one direct link. The multi-link device 2 determines the each direct link based on the correspondence between the stations at the two ends of the each direct link, and completes setup of the each direct link.

Optionally, in this case, the multi-link device 2 may further send the direct link setup confirm message to the multi-link device 3. The direct link setup confirm message includes the indication indicating to allow setup of the direct link and the correspondence between the stations at the two ends of the each direct link.

Optionally, when the direct link setup response message is sent by the multi-link device 3 in the foregoing Manner 2, the direct link setup response message includes the indication indicating to allow setup of the direct link and the parameter of the station in the multi-link device 3. The multi-link device 2 determines the correspondence between the stations at the two ends of each of the at least one direct link between the multi-link device 2 and the multi-link device 3 based on the parameters of the plurality of stations of the multi-link device 2 and the parameter of the station of the multi-link device 3, and sends the direct link setup confirm message. The direct link setup confirm message includes the indication indicating to allow setup of the direct link and the correspondence between the stations at the two ends of each of the at least one direct link.

Optionally, when the direct link setup response message is sent by the multi-link device 3 in the foregoing Manner 3, the direct link setup response message includes the indication indicating to allow setup of the direct link. In this case, the multi-link device 2 already stores the correspondence between the stations at the two ends of the at least one direct link, and completes setup of the each direct link.

Optionally, in this case, the multi-link device 2 may further send the direct link setup confirm message to the multi-link device 3. The direct link setup confirm message includes the indication indicating to allow setup of the direct link and the correspondence between the stations at the two ends of the each direct link.

Optionally, the multi-link device 2 sends the direct link setup confirm message by using the first station. A transmitter address of the direct link setup confirm message is the address of the first station, a destination address is the address of the multi-link device 3, and a receiver address is the address of the first AP.

Optionally, the direct link setup confirm message is a WLAN frame, the transmitter address, the destination address, and the receiver address are located in a frame header of the direct link setup confirm message, and the indication indicating to allow setup of the direct link and the correspondence between the stations at the two ends of the each direct link are located in a payload of the direct link setup confirm message.

Optionally, in this step, the following two structures of the direct link setup confirm message are provided. The two structures are respectively as follows.

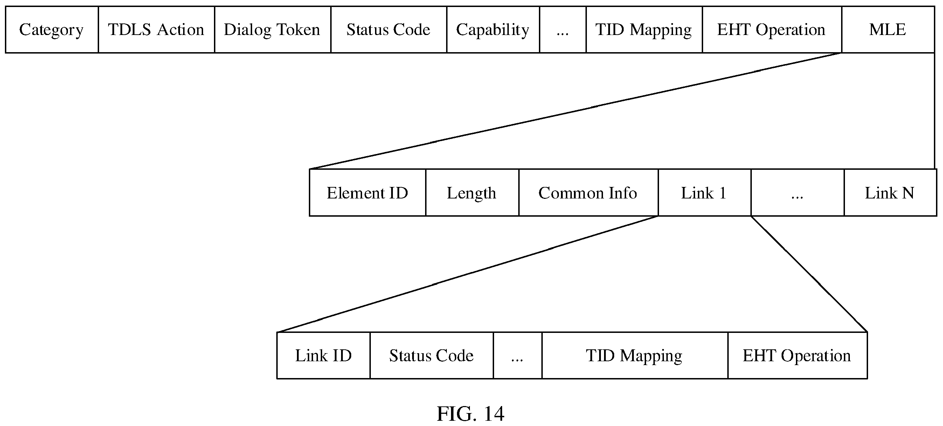

Refer to a first structure of the direct link setup confirm message shown in FIG. 14. In the first structure, the payload of the direct link setup confirm message includes a Category field, a TDLS Action field, a Status Code field, a Dialog Token field, a Capability field, a TID Mapping field, an EHT Operation field, and an MLE field.

The Status Code field includes an allowing indication for a direct link corresponding to the first station, and the first station is a station at one end of the direct link. The TID Mapping field and the EHT Operation field include the parameter of the first station and an identifier of a station at the other end of the direct link.

The MLE field includes a parameter of each of the at least one station in the multi-link device 2 other than the first station, an allowing indication for a direct link corresponding to each of the other stations, and the identifier of the other station. The at least one station is a station at one end of the at least one direct link.

The direct link setup response message of the first structure shown in FIG. 14 is obtained by adding the MLE field to a current direct link setup response message.

Still as shown in FIG. 14, the MLE field includes an Element ID field, a Length field, a Common Info field, and a Link field corresponding to each of the other stations. The Element ID field includes an identifier of the MLE field. The Length field includes a length of the MLE field. The Common Info field includes common information in parameters of all the other stations. For each of the other stations, the other station corresponds to one direct link. The other station is a station at one end of the direct link. A Link field corresponding to the other station includes other information in the parameter of the other station other than the common information, an allowing indication for the direct link and an identifier of a station at the other end of the direct link.

Still as shown in FIG. 14, the Link field corresponding to the other station includes a Link ID field, a Status Code field, a TID Mapping field, and an extremely high throughput operation (EHT Operation) field. The Link ID field includes an identifier of the other station. The Status Code field includes an allowing indication for the direct link corresponding to the other station. The TID Mapping field and the EHT Operation field include another parameter of the other station and the identifier of the station at the other end of the direct link.

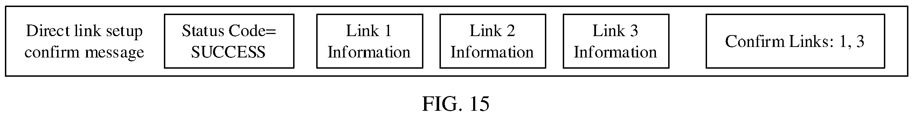

Refer to a second structure of the direct link setup confirm message shown in FIG. 15. In the second structure, the direct link setup confirm message includes a Status Code field, a Link Info field that corresponds to each of the plurality of stations in the multi-link device 2, and a confirm links (Confirm Links) field. The Status Code field includes the indication indicating to allow setup of the direct link. For each station, the station corresponds to one direct link, the station is a station at one end of the direct link, and a Link Info field corresponding to the station separately includes a parameter of the station and an identifier of a station at the other end of the direct link. The Confirm Links field includes an identifier of a Link Info field corresponding to a station that needs to be confirmed.

Optionally, after the multi-link device 2 sends the direct link setup confirm message by using the first station, the multi-link device 1 receives the direct link setup confirm message by using the first AP, and sends the direct link setup confirm message to the multi-link device 3.

Optionally, a payload of the direct link setup confirm message sent by the multi-link device 1 by using the second AP is the same as the payload of the direct link setup confirm message received by using the first AP. A transmitter address of the direct link setup confirm message sent by using the second AP is the address of the second AP, a receiver address is the address of the station associated with the second AP, and a source address is the address of the multi-link device 1 (the device address of the multi-link device 1 or the address of the first station). After receiving the direct link setup confirm message, the multi-link device 3 completes a process of setting up the at least one direct link between the multi-link device 2 and the multi-link device 3.

Another WLAN frame, for example, a common data frame, may be further transmitted between the multi-link device 2 and the multi-link device 3. A frame header structure of the common data frame is the same as a frame header structure of the direct link setup request message, the direct link setup response message, and the direct link discovery request message that are transmitted. A process of transmitting the another WLAN frame is the same as the foregoing process of transmitting WLAN frames such as the direct link setup request message, the direct link setup response message, and the direct link discovery request message.

Optionally, after the at least one direct link between the multi-link device 2 and the multi-link device 3 is set up, the multi-link device 2 and the multi-link device 3 may use any direct link to transmit a message. The transmitted message may be at least one of a direct link setup teardown (TDLS Setup Teardown) request message, a direct link peer traffic indication (TDLS Peer Traffic Indication) message, a direct link peer PSM request (TDLS Peer PSM Request) message, a direct link channel switch request (TDLS Channel Switch Request) message, and the like. The following separately describes the several messages one by one.

For the direct link setup teardown request message, the multi-link device 2 uses the direct link setup teardown request message to tear down the at least one direct link or some of the at least one direct link. An implementation is as follows.

The multi-link device 2 determines a link identifier set. The link identifier set includes identifiers of all or some of at least one direct link, and a direct link corresponding to each identifier in the link identifier set is a direct link to be torn down. The multi-link device 2 sends a direct link setup teardown request message by using one direct link. The direct link setup teardown request message includes the link identifier set. The multi-link device 3 tears down a direct link corresponding to an identifier of each direct link in the link identifier set.

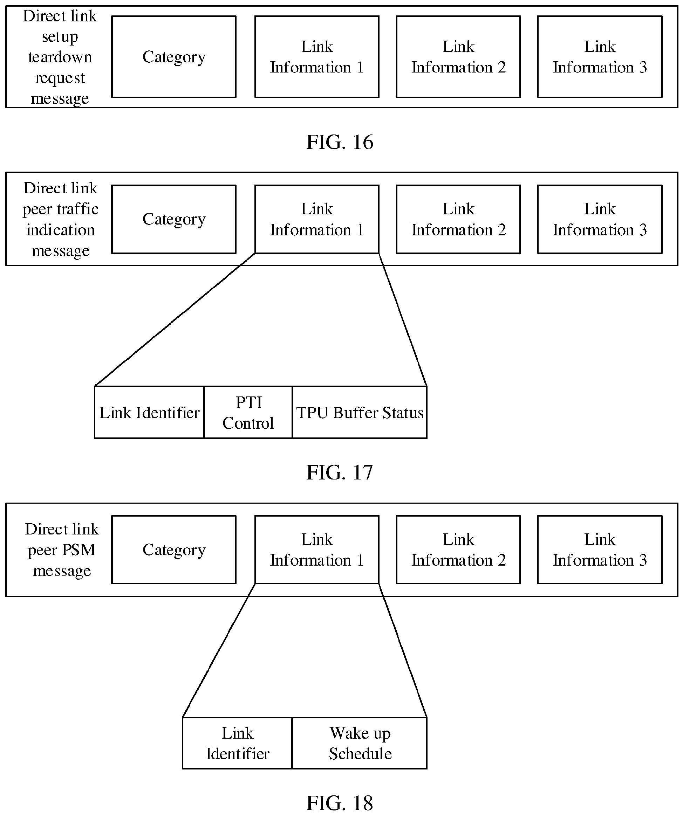

Optionally, refer to a structure of the direct link setup teardown request message shown in FIG. 16. The direct link setup teardown request message includes a Category field and a Link Information field corresponding to each identifier in the link identifier set. The Link Information field corresponding to each identifier includes the each identifier.

Optionally, the multi-link device 3 may alternatively tear down the at least one direct link or some of the at least one direct link. For an implementation, refer to the implementation of the multi-link device 2. Details are not described again.

For the direct link peer traffic indication message, the multi-link device 2 uses the direct link peer traffic indication information to notify the multi-link device 3 of a status of a service flow of each direct link in a first direct link set at a corresponding station in the multi-link device 2. The first direct link set includes at least one direct link or some of at least one direct link. An implementation is as follows.

The multi-link device 2 sends a direct link peer traffic indication message by using one direct link. The direct link peer traffic indication information includes an identifier of each direct link in the first direct link set and a status of a service flow that is transmitted through each direct link in the first direct link set at a corresponding station in the multi-link device 2. The multi-link device 3 receives the direct link peer traffic indication message, and extracts, from the direct link peer traffic indication information, the status of the service flow that is transmitted through each direct link at the corresponding station in the multi-link device 2. In this way, the status of the service flow of each direct link in the first direct link set at the corresponding station in the multi-link device 2 may be learned.

Optionally, refer to a structure of the direct link peer traffic indication message shown in FIG. 17. The direct link peer traffic indication message includes a Category field and a Link Information field corresponding to each direct link in the first link set. For each direct link in the first link set, the Link Information field corresponding to the direct link separately includes an identifier of the direct link and a status of a service flow that is transmitted through the direct link at a corresponding station in the multi-link device 2.

Optionally, still as shown in FIG. 17, the Link Information field corresponding to the direct link includes a Link Identifier field, a PTI Control field, and a TPU Buffer Status field. The Link Identifier field includes the identifier of the direct link. The TPU Buffer Status field includes the status of the service flow that is transmitted through the direct link at the corresponding station in the multi-link device 2.

Optionally, the multi-link device 3 may alternatively notify the multi-link device 2 of a status of a service flow of each direct link in a first direct link set at a corresponding station in the multi-link device 3. For an implementation, refer to the implementation of the multi-link device 2. Details are not described again.

For the direct link peer PSM request message, the multi-link device 2 uses the direct link peer PSM request message to notify the multi-link device 3 of PSM information of each direct link in a second direct link set at a corresponding station in the multi-link device 2. The second direct link set includes at least one direct link or some of at least one direct link. An implementation is as follows.

The multi-link device 2 sends a direct link peer PSM request message by using one direct link. The direct link peer PSM request message includes an identifier of each direct link in the second direct link set and PSM information of each direct link in the second direct link set at a corresponding station in the multi-link device 2. The multi-link device 3 receives the direct link peer PSM request message, and determines, based on the identifier of each direct link in the second direct link set and the PSM information of each direct link in the second direct link set at the corresponding station in the multi-link device 2, a wake up schedule of each direct link in the second direct link set at the corresponding station in the multi-link device 2. In this way, data transmission on each direct link is separately stopped during the wake up schedule of each direct link at the corresponding station in the multi-link device 2.

Optionally, refer to a structure of the direct link peer PSM message shown in FIG. 18. The direct link peer PSM message includes a Category field and a Link Information field corresponding to each direct link in the second link set. For each direct link in the second link set, the Link Information field corresponding to the direct link separately includes an identifier of the direct link and PSM information of the direct link at a corresponding station in the multi-link device 2.

Optionally, still as shown in FIG. 18, the Link Information field corresponding to the direct link includes a Link Identifier field and a wake up schedule (Wake up Schedule) field. The Link Identifier field includes the identifier of the direct link. The Wake up Schedule field includes a wake up schedule of the direct link at a corresponding station in the multi-link device 2.

Optionally, the multi-link device 3 may alternatively notify the multi-link device 2 of PSM information of each direct link in a second direct link set at a corresponding station in the multi-link device 3. For an implementation, refer to the implementation of the multi-link device 2. Details are not described again.

For the direct link channel switch request message, the multi-link device 2 uses the direct link channel switch request message to switch a channel currently occupied by each direct link in a third direct link set. The third direct link set includes at least one direct link or some of at least one direct link. An implementation is as follows.

The multi-link device 3 determines a target channel to which each direct link in the third direct link set is switched, and sends a direct link channel switch request message by using one direct link. The direct link channel switch request message includes an identifier of each direct link in the third direct link set and an identifier of a target channel corresponding to each direct link in the third direct link set. The multi-link device 3 receives the direct link channel switch request message, and separately switches a channel occupied by each direct link in the third direct link set to the target channel corresponding to each direct link in the third direct link set.

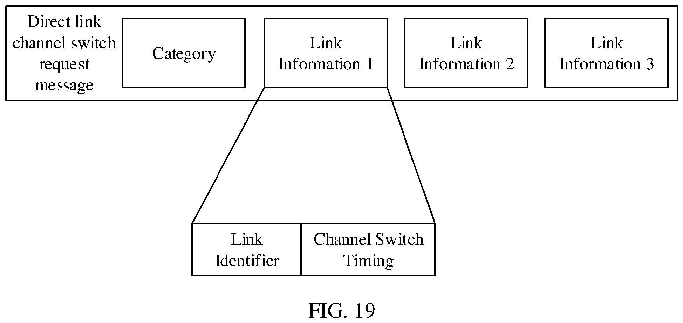

Optionally, refer to a structure of the direct link switch request message shown in FIG. 19. The direct link channel switch request message includes a Category field and a Link Information field corresponding to each direct link in the third link set. For each direct link in the third link set, the Link Information field corresponding to the direct link separately includes an identifier of the direct link and an identifier of a target channel corresponding to the direct link.

Optionally, still as shown in FIG. 19, the Link Information field corresponding to the direct link includes a Link Identifier field and a wake up schedule (Channel Switch Timing) field. The Link Identifier field includes the identifier of the direct link. The Channel Switch Timing field includes the identifier of the target channel corresponding to the direct link.

Optionally, the multi-link device 3 may alternatively switch a channel currently occupied by each direct link in a third direct link set. For an implementation, refer to the implementation of the multi-link device 2. Details are not described again.

In this embodiment of this application, the direct link setup request message sent by the multi-link device 2 includes the parameters of the plurality of stations belonging to the multi-link device 2 and the address of the multi-link device 3. The multi-link device 3 receives the direct link setup request message, and sends the direct link setup response message to the multi-link device 2, to set up the at least one direct link between the multi-link device 2 and the multi-link device 3. In this way, the at least one direct link is used to transmit data between the multi-link device 2 and the multi-link device 3, to improve reliability and a throughput of data transmission.

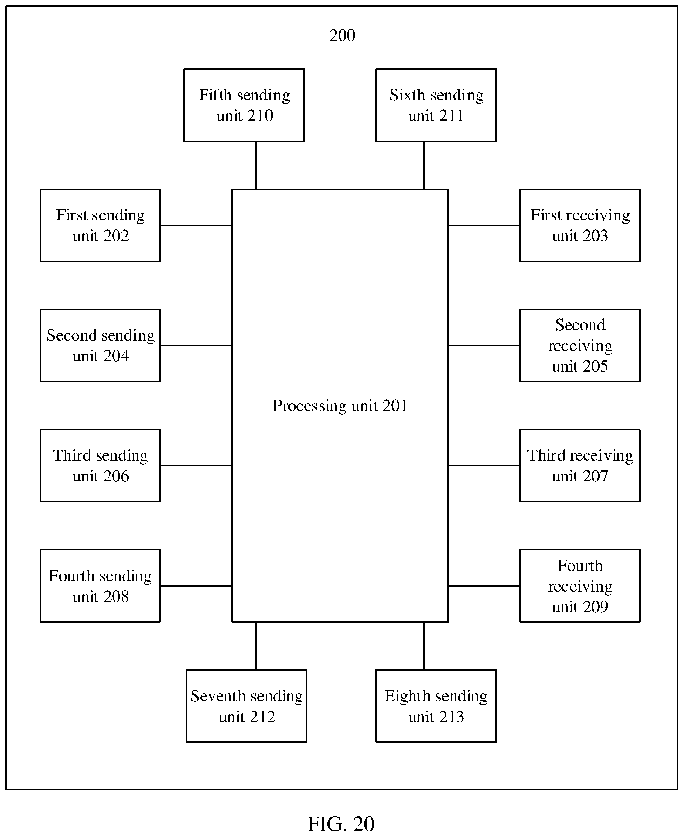

As shown in FIG. 20, an embodiment of this application provides an apparatus 200 for setting up a direct link in a wireless local area network. The apparatus 200 may be deployed in the multi-link device 2 in the embodiment shown in FIG. 1 or FIG. 6, and includes:
a processing unit 201, configured to set up, based on parameters of a plurality of stations belonging to the apparatus 200 and device information of a second multi-link device, at least one direct link between the apparatus 200 and the second multi-link device, where each of the at least one direct link is connected to one of the plurality of stations belonging to the apparatus 200 and one station belonging to the second multi-link device.

Optionally, the parameters of the plurality of stations belonging to the apparatus 200 include an identifier and capability information of each of the plurality of stations.

Optionally, capabilities of stations at two ends of each of the at least one direct link correspond to each other.

Optionally, the apparatus 200 further includes:
a first sending unit 202, configured to send a direct link discovery request message, where the direct link discovery request message includes the parameters of the plurality of stations belonging to the apparatus and an address of the second multi-link device; and
a first receiving unit 203, configured to receive a direct link discovery response message sent by the second multi-link device.

Optionally, for a detailed implementation process in which the first sending unit 202 sends the direct link discovery request message, refer to related content in Step 11 in the embodiment shown in FIG. 6, and for a detailed implementation process in which the first receiving unit 203 receives the direct link discovery response message, refer to related content in Step 15 in the embodiment shown in FIG. 6.

Optionally, the apparatus 200 further includes:
a second sending unit 204, configured to send a direct link setup request message, where the direct link setup request message includes the parameters of the plurality of stations belonging to the apparatus 200 and the address of the second multi-link device; and
a second receiving unit 205, configured to receive a direct link setup response message, where the direct link setup response message includes an indication indicating to allow setup of a direct link and a correspondence between the stations at the two ends of each of the at least one direct link.

Optionally, for a detailed implementation process in which the second sending unit 204 sends the direct link setup request message, refer to related content in Step 101 in the embodiment shown in FIG. 6, and for a detailed implementation process in which the second receiving unit 205 receives the direct link setup response message, refer to related content in Step 105 in the embodiment shown in FIG. 6.

Optionally, the direct link setup response message further includes a parameter of a station of the second multi-link device.

Optionally, the apparatus 200 further includes:
a third sending unit 206, configured to send a direct link setup request message, where the direct link setup request message includes the parameters of the plurality of stations belonging to the apparatus 200 and the address of the second multi-link device; and
a third receiving unit 207, configured to receive a direct link setup response message, where the direct link setup response message includes an indication indicating to allow setup of a direct link and a parameter of a station of the second multi-link device.

The third sending unit 206 is further configured to send a direct link setup confirm message, where the direct link setup confirm message includes a correspondence between the stations at the two ends of each of the at least one direct link.

Optionally, the apparatus 200 further includes:
a fourth sending unit 208, configured to send a direct link discovery request message, where the direct link discovery request message includes the parameters of the plurality of stations belonging to the apparatus 200 and an address of the second multi-link device; and
a fourth receiving unit 209, configured to receive a direct link discovery response message sent by the second multi-link device, where the direct link discovery response message includes a parameter of a station of the second multi-link device.

Optionally, the fourth sending unit 208 is further configured to send a direct link setup request message, where the direct link setup request message includes a correspondence between the stations at the two ends of each of the at least one direct link and the address of the second multi-link device.

The fourth receiving unit 209 is further configured to receive a direct link setup response message, where the direct link setup response message includes an indication indicating to allow setup of a direct link.

Optionally, for a detailed implementation process in which the fourth sending unit 208 sends the direct link setup request message, refer to related content in Step 101 in the embodiment shown in FIG. 6, and for a detailed implementation process in which the fourth receiving unit 209 receives the direct link setup response message, refer to related content in Step 105 in the embodiment shown in FIG. 6.

Optionally, the processing unit 201 is further configured to:
determine the correspondence between the stations at the two ends of each of the at least one direct link based on the parameters of the plurality of stations of the apparatus 200 and the parameter of the station of the second multi-link device.

Optionally, the apparatus 200 further includes:
a fifth sending unit 210, configured to send a direct link setup teardown request message, where the direct link setup teardown request message includes a link identifier set, the link identifier set includes identifiers of all or some of the at least one direct link, and the direct link setup teardown request message is used to indicate the second multi-link device to tear down a direct link corresponding to an identifier of each direct link in the link identifier set.

Optionally, the apparatus 200 further includes:
a sixth sending unit 211, configured to send a direct link peer traffic indication message, where the direct link peer traffic indication information includes an identifier of each direct link in a first direct link set and a status of a service flow that is transmitted through each direct link in the first direct link set at a corresponding station in the apparatus 200, and the first direct link set includes the at least one direct link or some of the at least one direct link.

Optionally, the apparatus 200 further includes:
a seventh sending unit 212, configured to send a direct link peer PSM request message, where the direct link peer PSM request message includes an identifier of each direct link in a second direct link set and PSM information of each direct link in the second direct link set at a corresponding station in the apparatus 200, and the second direct link set includes the at least one direct link or some of the at least one direct link.

Optionally, the apparatus 200 further includes:
an eighth sending unit 213, configured to send a direct link channel switch request message, where the direct link channel switch request message includes an identifier of each direct link in a third direct link set and an identifier of a target channel corresponding to each direct link in the third direct link set, the direct link channel switch request message is used to indicate the second multi-link device to separately switch a channel occupied by each direct link in the third direct link set to the target channel corresponding to each direct link in the third direct link set, and the third direct link set includes the at least one direct link or some of the at least one direct link.

In this embodiment of this application, because the sent direct link setup request message includes the parameters of the plurality of stations in the apparatus, the processing unit sets up the at least one direct link between the apparatus and the second multi-link device. Each of the at least one direct link is connected to one of the plurality of stations belonging to the apparatus and the station belonging to the second multi-link device. In this way, at least one direct link is set up between two multi-link devices, and each of the at least one direct link may be used to transmit data between the two multi-link devices, to improve reliability and a throughput of data transmission.

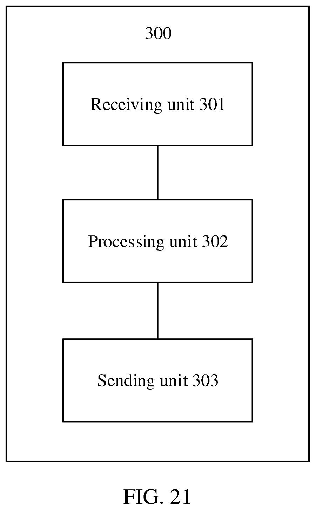

As shown in FIG. 21, an embodiment of this application provides an apparatus 300 for setting up a direct link in a wireless local area network. The apparatus 300 may be deployed in the multi-link device 3 in the embodiment shown in FIG. 1 or FIG. 6, and includes:
a receiving unit 301, configured to receive a direct link setup request message from a second multi-link device, where the direct link setup request message includes parameters of a plurality of stations belonging to the second multi-link device, and the apparatus 300 includes one station;
a processing unit 302, configured to select one station from the plurality of stations based on the parameters of the plurality of stations and a parameter of the station; and
a sending unit 303, configured to send a direct link setup response message to the second multi-link device, where the direct link setup response message includes a correspondence between stations at two ends of a direct link to be set up, and the correspondence is a correspondence between the station and the selected station.

Optionally, for a detailed implementation process in which the processing unit 302 selects the station, refer to related content in Step 103 in the embodiment shown in FIG. 6.

Optionally, the processing unit 302 is configured to select, from the plurality of stations based on the parameters of the plurality of stations and the parameter of the station, one station whose capability corresponds to a capability of the station.

In this embodiment of this application, the receiving unit receives the direct link setup request message from the second multi-link device. The direct link setup request message includes the parameters of the plurality of stations belonging to the second multi-link device, and the apparatus includes the station. The processing unit selects the station from the plurality of stations based on the parameters of the plurality of stations and the parameter of the station. The sending unit sends the direct link setup response message to the second multi-link device. The direct link setup response message includes the correspondence between the stations at the two ends of the direct link to be set up. The correspondence is the correspondence between the station and the selected station. Because the processing unit selects the station from the plurality of stations based on the parameters of the plurality of stations and the parameter of the station, a direct link may also be set up between the apparatus including the station and the second multi-link device including the plurality of stations.

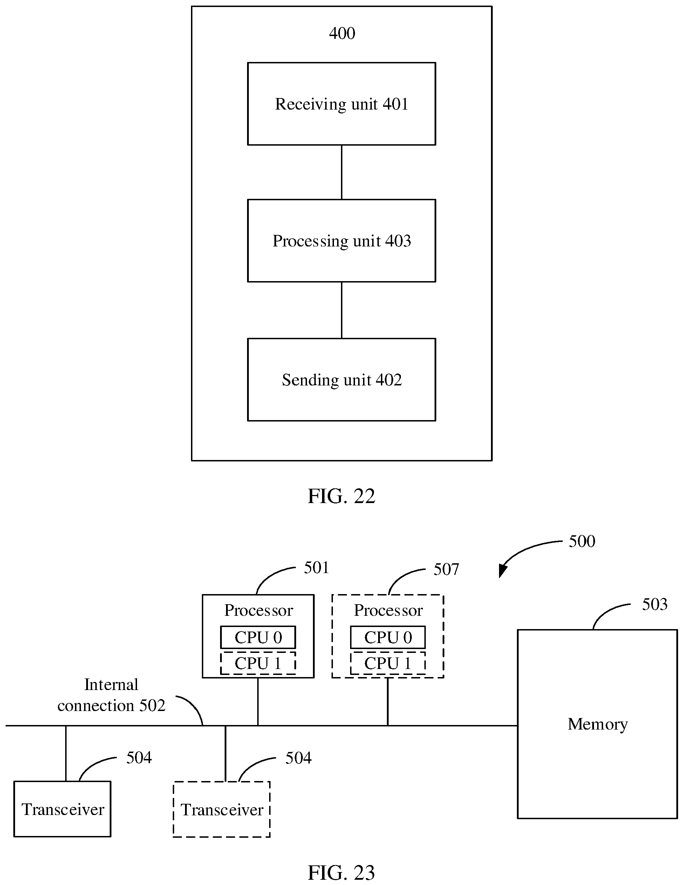

As shown in FIG. 22, an embodiment of this application provides an apparatus 400 for sending a wireless local area network WLAN frame. The apparatus 400 may be deployed in the multi-link device 1 in the embodiment shown in FIG. 1 or FIG. 6, and includes:
a receiving unit 401, configured to receive, by using a first access point AP, a first WLAN frame sent by a second multi-link device, where the first AP belongs to the apparatus 400, a transmitter address of the first WLAN frame is an address of the second multi-link device, a destination address of the first WLAN frame is an address of a station, a receiver address of the first WLAN frame is an address of the first AP, the station belongs to a third multi-link device, the station is not associated with the first AP, the apparatus 400 is an access point multi-link device, and the second multi-link device and the third multi-link device are non-access point multi-link devices; and
a sending unit 402, configured to send a second WLAN frame by using a second AP, where the second AP belongs to the third multi-link device, a payload of the second WLAN frame is the same as a payload of the first WLAN frame, the station is associated with the second AP, a transmitter address of the second WLAN frame is an address of the second AP, a receiver address of the second WLAN frame is the address of the station, and a source address of the second WLAN frame is the address of the second multi-link device.

Optionally, the apparatus 400 further includes a processing unit 403. The processing unit 403 is configured to determine the second AP associated with the station.

Optionally, the first WLAN frame is a direct link setup request message, a direct link setup response message, a direct link setup confirm message, a direct link discovery request message, or a direct link discovery response message that is used to set up at least one direct link between the second multi-link device and the third multi-link device.

In this embodiment of this application, because the first AP configured to receive the first WLAN frame is different from the second AP associated with the station corresponding to the destination address, the processing unit may determine the second AP associated with the station, and the sending unit sends the second WLAN by using the second AP. In addition, because the payload of the second WLAN frame is the same as the payload of the first WLAN frame, content of a payload part of the first WLAN frame can be sent to the second multi-link device.

FIG. 23 is a schematic diagram of an apparatus 500 for setting up a direct link in a wireless local area network according to an embodiment of this application. The apparatus 500 may be the multi-link device 2 in any one of the foregoing embodiments. The apparatus 500 includes at least one processor 501, an internal connection 502, a memory 503, and at least one transceiver 504.

The apparatus 500 is an apparatus of a hardware structure, and may be configured to implement the function modules in the apparatus 200 shown in FIG. 20. For example, a person skilled in the art may figure out that the processing unit 201 in the apparatus 200 shown in FIG. 20 may be implemented by invoking code in the memory 503 by the at least one processor 501, and the first sending unit 202, the first receiving unit 203, the second sending unit 204, the second receiving unit 205, the third sending unit 906, the third receiving unit 207, the fourth sending unit 208, the fourth receiving unit 209, the fifth sending unit 210, the sixth sending unit 211, the seventh sending unit 212, and the eighth sending unit 213 in the apparatus 200 shown in FIG. 20 are implemented by using the transceiver 504.

Optionally, the apparatus 500 may be further configured to implement a function of the multi-link device 2 in any one of the foregoing embodiments.

Optionally, the processor 501 may be a general-purpose central processing unit (central processing unit, CPU), a network processor (network processor, NP), a microprocessor, an application-specific integrated circuit (application-specific integrated circuit, ASIC), or one or more integrated circuits configured to control program execution of solutions of this application.

The internal connection 502 may include a path for transmitting information between the foregoing components. Optionally, the internal connection 502 is a board, a bus, or the like.

The transceiver 504 is configured to communicate with another device or a communication network.

The memory 503 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, this is not limited thereto. The memory may exist independently, and is connected to the processor through the bus. The memory may alternatively be integrated with the processor.

The memory 503 is configured to store application program code for executing the solutions of this application, and the processor 501 controls execution. The processor 501 is configured to execute the application program code stored in the memory 503, and cooperate with the at least one transceiver 504, so that the apparatus 500 implements a function in the method in this patent.

During specific implementation, in an embodiment, the processor 501 may include one or more CPUs, for example, a CPU 0 and a CPU 1 shown in FIG. 23.

During specific implementation, in an embodiment, the apparatus 500 may include a plurality of processors, for example, the processor 501 and a processor 507 shown in FIG. 23. Each of the processors may be a single-core (single-CPU) processor, or may be a multi-core (multi-CPU) processor. The processor herein may be one or more devices, circuits, and/or processing cores configured to process data (for example, computer program instructions).

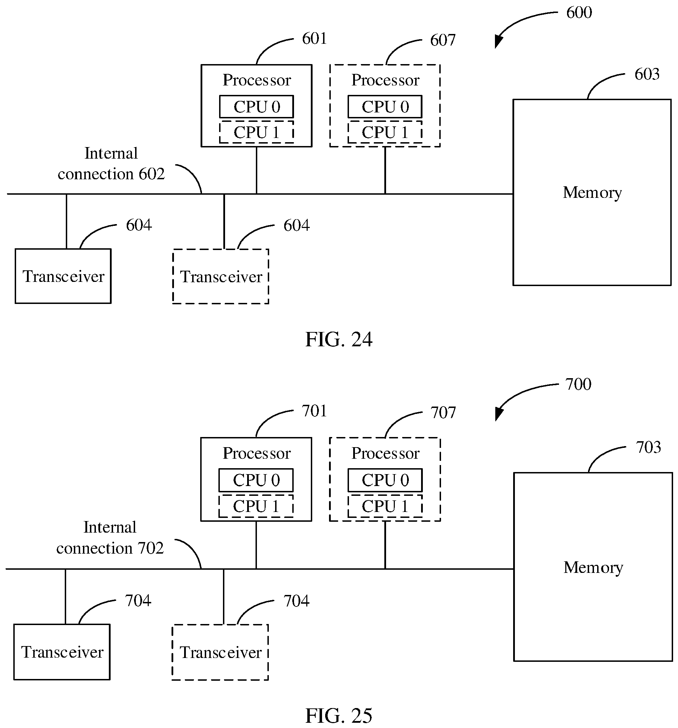

FIG. 24 is a schematic diagram of an apparatus 600 for setting up a direct link in a wireless local area network according to an embodiment of this application. The apparatus 600 may be the multi-link device 3 in any one of the foregoing embodiments. The apparatus 600 includes at least one processor 601, an internal connection 602, a memory 603, and at least one transceiver 604.

The apparatus 600 is an apparatus of a hardware structure, and may be configured to implement the function modules in the apparatus 300 shown in FIG. 21. For example, a person skilled in the art may figure out that the processing unit 302 in the apparatus 300 shown in FIG. 21 may be implemented by invoking code in the memory 603 by the at least one processor 601, and the receiving unit 301 and the sending unit 303 in the apparatus 300 shown in FIG. 21 may be implemented by the transceiver 604.

Optionally, the apparatus 600 may be further configured to implement a function of the multi-link device 3 in any one of the foregoing embodiments.

Optionally, the processor 601 may be a general-purpose central processing unit (central processing unit, CPU), a network processor (network processor, NP), a microprocessor, an application-specific integrated circuit (application-specific integrated circuit, ASIC), or one or more integrated circuits configured to control program execution of solutions of this application.

The internal connection 602 may include a path for transmitting information between the foregoing components. Optionally, the internal connection 602 is a board, a bus, or the like.

The transceiver 604 is configured to communicate with another device or a communication network.

The memory 603 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, this is not limited thereto. The memory may exist independently, and is connected to the processor through the bus. The memory may alternatively be integrated with the processor.

The memory 603 is configured to store application program code for executing the solutions of this application, and the processor 601 controls execution. The processor 601 is configured to execute the application program code stored in the memory 603, and cooperate with the at least one transceiver 604, so that the apparatus 600 implements a function in the method in this patent.

During specific implementation, in an embodiment, the processor 601 may include one or more CPUs, for example, a CPU 0 and a CPU 1 shown in FIG. 24.

During specific implementation, in an embodiment, the apparatus 600 may include a plurality of processors, for example, the processor 601 and a processor 607 shown in FIG. 24. Each of the processors may be a single-core (single-CPU) processor, or may be a multi-core (multi-CPU) processor. The processor herein may be one or more devices, circuits, and/or processing cores configured to process data (for example, computer program instructions).

FIG. 25 is a schematic diagram of an apparatus 700 for sending a wireless local area network WLAN frame according to an embodiment of this application. The apparatus 700 may be the multi-link device 1 in any one of the foregoing embodiments. The apparatus 700 includes at least one processor 701, an internal connection 702, a memory 703, and at least one transceiver 704.

The apparatus 700 is an apparatus of a hardware structure, and may be configured to implement the function modules in the apparatus 400 shown in FIG. 22. For example, a person skilled in the art may figure out that the processing unit 403 in the apparatus 400 shown in FIG. 22 may be implemented by invoking code in the memory 703 by the at least one processor 701, and the receiving unit 401 and the sending unit 402 in the apparatus 400 shown in FIG. 22 may be implemented by the transceiver 704.

Optionally, the apparatus 700 may be further configured to implement a function of the multi-link device 1 in any one of the foregoing embodiments.

Optionally, the processor 701 may be a general-purpose central processing unit (central processing unit, CPU), a network processor (network processor, NP), a microprocessor, an application-specific integrated circuit (application-specific integrated circuit, ASIC), or one or more integrated circuits configured to control program execution of solutions of this application.

The internal connection 702 may include a path for transmitting information between the foregoing components. Optionally, the internal connection 702 is a board, a bus, or the like.

The transceiver 704 is configured to communicate with another device or a communication network.

The memory 703 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, this is not limited thereto. The memory may exist independently, and is connected to the processor through the bus. The memory may alternatively be integrated with the processor.

The memory 703 is configured to store application program code for executing the solutions of this application, and the processor 701 controls execution. The processor 701 is configured to execute the application program code stored in the memory 703, and cooperate with the at least one transceiver 704, so that the apparatus 700 implements a function in the method in this patent.

During specific implementation, in an embodiment, the processor 701 may include one or more CPUs, for example, a CPU 0 and a CPU 1 shown in FIG. 25.

During specific implementation, in an embodiment, the apparatus 700 may include a plurality of processors, for example, the processor 701 and a processor 707 shown in FIG. 25. Each of the processors may be a single-core (single-CPU) processor, or may be a multi-core (multi-CPU) processor. The processor herein may be one or more devices, circuits, and/or processing cores configured to process data (for example, computer program instructions).

FIG. 1 shows a system for setting up a direct link in a wireless local area network according to an embodiment of this application. The system includes the apparatus 200 shown in FIG. 19, the apparatus 300 shown in FIG. 20, and the apparatus 400 shown in FIG. 21. Alternatively, the system includes the apparatus 500 shown in FIG. 22, the apparatus 600 shown in FIG. 23, and the apparatus 700 shown in FIG. 24.

The apparatus 200 shown in FIG. 19 or the apparatus 500 shown in FIG. 22 may be the multi-link device 2. The apparatus 300 shown in FIG. 20 or the apparatus 600 shown in FIG. 23 may be the multi-link device 3. The apparatus 400 shown in FIG. 21 or the apparatus 700 shown in FIG. 24 may be the multi-link device 1.

A person of ordinary skill in the art may understand that all or some of the steps of the foregoing embodiments may be implemented by hardware or a program instructing related hardware. The program may be stored in a computer-readable storage medium. The storage medium may be a read-only memory, a magnetic disk, an optical disc, or the like.

## Claims

1. A method for setting up a direct link in a wireless local area network, wherein the method comprises:
setting up, by a first multi-link device based on parameters of a plurality of stations belonging to the first multi-link device and device information of a second multi-link device, at least one direct link between the first multi-link device and the second multi-link device, wherein each of the at least one direct link is connected to one of the plurality of stations belonging to the first multi-link device and one station belonging to the second multi-link device.

2. The method according to claim 1, wherein the parameters of the plurality of stations belonging to the first multi-link device comprise an identifier and capability information of each of the plurality of stations.

3. The method according to claim 1 or 2, wherein capabilities of stations at two ends of each of the at least one direct link correspond to each other.

4. The method according to any one of claims 1 to 3, wherein the method further comprises:
sending, by the first multi-link device, a direct link discovery request message, wherein the direct link discovery request message comprises the parameters of the plurality of stations belonging to the first multi-link device and an address of the second multi-link device; and
receiving, by the first multi-link device, a direct link discovery response message sent by the second multi-link device.

5. The method according to any one of claims 1 to 4, wherein the setting up, by a first multi-link device based on parameters of a plurality of stations belonging to the first multi-link device and device information of a second multi-link device, at least one direct link between the first multi-link device and the second multi-link device comprises:
sending, by the first multi-link device, a direct link setup request message, wherein the direct link setup request message comprises the parameters of the plurality of stations belonging to the first multi-link device and the address of the second multi-link device; and
receiving, by the first multi-link device, a direct link setup response message, wherein the direct link setup response message comprises an indication indicating to allow setup of a direct link and a correspondence between the stations at the two ends of each of the at least one direct link.

6. The method according to claim 5, wherein the direct link setup response message further comprises a parameter of a station of the second multi-link device.

7. The method according to any one of claims 1 to 4, wherein the setting up, by a first multi-link device based on parameters of a plurality of stations belonging to the first multi-link device and device information of a second multi-link device, at least one direct link between the first multi-link device and the second multi-link device comprises:
sending, by the first multi-link device, a direct link setup request message, wherein the direct link setup request message comprises the parameters of the plurality of stations belonging to the first multi-link device and the address of the second multi-link device;
receiving, by the first multi-link device, a direct link setup response message, wherein the direct link setup response message comprises an indication indicating to allow setup of a direct link and a parameter of a station of the second multi-link device; and
sending, by the first multi-link device, a direct link setup confirm message, wherein the direct link setup confirm message comprises a correspondence between the stations at the two ends of each of the at least one direct link.

8. The method according to any one of claims 1 to 3, wherein the method further comprises:
sending, by the first multi-link device, a direct link discovery request message, wherein the direct link discovery request message comprises the parameters of the plurality of stations belonging to the first multi-link device and an address of the second multi-link device; and
receiving, by the first multi-link device, a direct link discovery response message sent by the second multi-link device, wherein the direct link discovery response message comprises a parameter of a station of the second multi-link device.

9. The method according to claim 8, wherein the setting up, by a first multi-link device based on parameters of a plurality of stations belonging to the first multi-link device and device information of a second multi-link device, at least one direct link between the first multi-link device and the second multi-link device comprises:
sending, by the first multi-link device, a direct link setup request message, wherein the direct link setup request message comprises a correspondence between the stations at the two ends of each of the at least one direct link and the address of the second multi-link device; and
receiving, by the first multi-link device, a direct link setup response message, wherein the direct link setup response message comprises an indication indicating to allow setup of a direct link.

10. The method according to claim 9, wherein the method further comprises:
determining, by the first multi-link device, the correspondence between the stations at the two ends of each of the at least one direct link based on the parameters of the plurality of stations of the first multi-link device and the parameter of the station of the second multi-link device.

11. The method according to any one of claims 1 to 10, wherein the method further comprises:
sending, by the first multi-link device, a direct link setup teardown request message, wherein the direct link setup teardown request message comprises a link identifier set, the link identifier set comprises identifiers of all or some of the at least one direct link, and the direct link setup teardown request message is used to indicate the second multi-link device to tear down a direct link corresponding to an identifier of each direct link in the link identifier set.

12. The method according to any one of claims 1 to 11, wherein the method further comprises:
sending, by the first multi-link device, a direct link peer traffic indication message, wherein the direct link peer traffic indication message comprises an identifier of each direct link in a first direct link set and a status of a service flow that is transmitted through each direct link in the first direct link set at a corresponding station in the first multi-link device, and the first direct link set comprises the at least one direct link or some of the at least one direct link.

13. The method according to any one of claims 1 to 12, wherein the method further comprises:
sending, by the first multi-link device, a direct link peer PSM request message, wherein the direct link peer PSM request message comprises an identifier of each direct link in a second direct link set and PSM information of each direct link in the second direct link set at a corresponding station in the first multi-link device, and the second direct link set comprises the at least one direct link or some of the at least one direct link.

14. The method according to any one of claims 1 to 13, wherein the method further comprises:
sending, by the first multi-link device, a direct link channel switch request message, wherein the direct link channel switch request message comprises an identifier of each direct link in a third direct link set and an identifier of a target channel corresponding to each direct link in the third direct link set, the direct link channel switch request message is used to indicate the second multi-link device to separately switch a channel occupied by each direct link in the third direct link set to the target channel corresponding to each direct link in the third direct link set, and the third direct link set comprises the at least one direct link or some of the at least one direct link.

15. A method for setting up a direct link in a wireless local area network, wherein the method comprises:
receiving, by a first multi-link device, a direct link setup request message from a second multi-link device, wherein the direct link setup request message comprises parameters of a plurality of stations belonging to the second multi-link device, and the first multi-link device comprises one station;
selecting, by the first multi-link device, one station from the plurality of stations based on the parameters of the plurality of stations and a parameter of the station; and
sending, by the first multi-link device, a direct link setup response message to the second multi-link device, wherein the direct link setup response message comprises a correspondence between stations at two ends of a direct link to be set up, and the correspondence is a correspondence between the station and the selected station.

16. The method according to claim 15, wherein the selecting, by the second multi-link device, one station from the plurality of stations based on the parameters of the plurality of stations and a parameter of the station comprises:
selecting, by the first multi-link device from the plurality of stations based on the parameters of the plurality of stations and the parameter of the station, one station whose capability corresponds to a capability of the station.

17. A method for sending a wireless local area network (WLAN) frame, wherein the method comprises:
receiving, by a first multi-link device by using a first access point (AP), a first WLAN frame sent by a second multi-link device, wherein the first AP belongs to the first multi-link device, a transmitter address of the first WLAN frame is an address of the second multi-link device, a destination address of the first WLAN frame is an address of a station, a receiver address of the first WLAN frame is an address of the first AP, the station belongs to a third multi-link device, the station is not associated with the first AP, the first multi-link device is an access point multi-link device, and the second multi-link device and the third multi-link device are non-access point multi-link devices; and
sending, by the first multi-link device, a second WLAN frame by using a second AP, wherein the second AP belongs to the third multi-link device, a payload of the second WLAN frame is the same as a payload of the first WLAN frame, the station is associated with the second AP, a transmitter address of the second WLAN frame is an address of the second AP, a receiver address of the second WLAN frame is the address of the station, and a source address of the second WLAN frame is the address of the second multi-link device.

18. The method according to claim 17, wherein the first WLAN frame is a direct link setup request message, a direct link setup response message, a direct link setup confirm message, a direct link discovery request message, or a direct link discovery response message that is used to set up at least one direct link between the second multi-link device and the third multi-link device.

19. An apparatus for setting up a direct link in a wireless local area network, wherein the apparatus comprises:
a processing unit, configured to set up, based on parameters of a plurality of stations belonging to the apparatus and device information of a second multi-link device, at least one direct link between the apparatus and the second multi-link device, wherein each of the at least one direct link is connected to one of the plurality of stations belonging to the apparatus and one station belonging to the second multi-link device.

20. The apparatus according to claim 19, wherein the parameters of the plurality of stations belonging to the apparatus comprise an identifier and capability information of each of the plurality of stations.

21. The apparatus according to claim 19 or 20, wherein capabilities of stations at two ends of each of the at least one direct link correspond to each other.

22. The apparatus according to any one of claims 19 to 21, wherein the apparatus further comprises:
a first sending unit, configured to send a direct link discovery request message, wherein the direct link discovery request message comprises the parameters of the plurality of stations belonging to the apparatus and an address of the second multi-link device; and
a first receiving unit, configured to receive a direct link discovery response message sent by the second multi-link device.

23. The apparatus according to any one of claims 19 to 22, wherein the apparatus further comprises:
a second sending unit, configured to send a direct link setup request message, wherein the direct link setup request message comprises the parameters of the plurality of stations belonging to the apparatus and the address of the second multi-link device; and
a second receiving unit, configured to receive a direct link setup response message, wherein the direct link setup response message comprises an indication indicating to allow setup of a direct link and a correspondence between the stations at the two ends of each of the at least one direct link.

24. The apparatus according to claim 23, wherein the direct link setup response message further comprises a parameter of a station of the second multi-link device.

25. The apparatus according to any one of claims 19 to 22, wherein the apparatus further comprises:
a third sending unit, configured to send a direct link setup request message, wherein the direct link setup request message comprises the parameters of the plurality of stations belonging to the apparatus and the address of the second multi-link device; and
a third receiving unit, configured to receive a direct link setup response message, wherein the direct link setup response message comprises an indication indicating to allow setup of a direct link and a parameter of a station of the second multi-link device; and
the third sending unit is further configured to send a direct link setup confirm message, wherein the direct link setup confirm message comprises a correspondence between the stations at the two ends of each of the at least one direct link.

26. The apparatus according to any one of claims 19 to 21, wherein the apparatus further comprises:
a fourth sending unit, configured to send a direct link discovery request message, wherein the direct link discovery request message comprises the parameters of the plurality of stations belonging to the apparatus and an address of the second multi-link device; and
a fourth receiving unit, configured to receive a direct link discovery response message sent by the second multi-link device, wherein the direct link discovery response message comprises a parameter of a station of the second multi-link device.

27. The apparatus according to claim 26, wherein the fourth sending unit is further configured to send a direct link setup request message, wherein the direct link setup request message comprises a correspondence between the stations at the two ends of each of the at least one direct link and the address of the second multi-link device; and
the fourth receiving unit is further configured to receive a direct link setup response message, wherein the direct link setup response message comprises an indication indicating to allow setup of a direct link.

28. The apparatus according to claim 27, wherein the processing unit is further configured to:
determine the correspondence between the stations at the two ends of each of the at least one direct link based on the parameters of the plurality of stations of the apparatus and the parameter of the station of the second multi-link device.

29. The apparatus according to any one of claims 19 to 28, wherein the apparatus further comprises:
a fifth sending unit, configured to send a direct link setup teardown request message, wherein the direct link setup teardown request message comprises a link identifier set, the link identifier set comprises identifiers of all or some of the at least one direct link, and the direct link setup teardown request message is used to indicate the second multi-link device to tear down a direct link corresponding to an identifier of each direct link in the link identifier set.

30. The apparatus according to any one of claims 19 to 29, wherein the apparatus further comprises:
a sixth sending unit, configured to send a direct link peer traffic indication message, wherein the direct link peer traffic indication information comprises an identifier of each direct link in a first direct link set and a status of a service flow that is transmitted through each direct link in the first direct link set at a corresponding station in the apparatus, and the first direct link set comprises the at least one direct link or some of the at least one direct link.

31. The apparatus according to any one of claims 19 to 30, wherein the apparatus further comprises:
a seventh sending unit, configured to send a direct link peer PSM request message, wherein the direct link peer PSM request message comprises an identifier of each direct link in a second direct link set and PSM information of each direct link in the second direct link set at a corresponding station in the apparatus, and the second direct link set comprises the at least one direct link or some of the at least one direct link.

32. The apparatus according to any one of claims 19 to 31, wherein the apparatus further comprises:
an eighth sending unit, configured to send a direct link channel switch request message, wherein the direct link channel switch request message comprises an identifier of each direct link in a third direct link set and an identifier of a target channel corresponding to each direct link in the third direct link set, the direct link channel switch request message is used to indicate the second multi-link device to separately switch a channel occupied by each direct link in the third direct link set to the target channel corresponding to each direct link in the third direct link set, and the third direct link set comprises the at least one direct link or some of the at least one direct link.

33. An apparatus for setting up a direct link in a wireless local area network, wherein the apparatus comprises:
a receiving unit, configured to receive a direct link setup request message from a second multi-link device, wherein the direct link setup request message comprises parameters of a plurality of stations belonging to the second multi-link device, and the apparatus comprises one station;
a processing unit, configured to select one station from the plurality of stations based on the parameters of the plurality of stations and a parameter of the station; and
a sending unit, configured to send a direct link setup response message to the second multi-link device, wherein the direct link setup response message comprises a correspondence between stations at two ends of a direct link to be set up, and the correspondence is a correspondence between the station and the selected station.

34. The apparatus according to claim 33, wherein the processing unit is configured to select, from the plurality of stations based on the parameters of the plurality of stations and the parameter of the station, one station whose capability corresponds to a capability of the station.

35. An apparatus for sending a wireless local area network (WLAN) frame, wherein the apparatus comprises:
a receiving unit, configured to receive, by using a first access point (AP), a first WLAN frame sent by a second multi-link device, wherein the first AP belongs to the apparatus, a transmitter address of the first WLAN frame is an address of the second multi-link device, a destination address of the first WLAN frame is an address of a station, a receiver address of the first WLAN frame is an address of the first AP, the station belongs to a third multi-link device, the station is not associated with the first AP, the apparatus is an access point multi-link device, and the second multi-link device and the third multi-link device are non-access point multi-link devices; and
a sending unit, configured to send a second WLAN frame by using a second AP, wherein the second AP belongs to the third multi-link device, a payload of the second WLAN frame is the same as a payload of the first WLAN frame, the station is associated with the second AP, a transmitter address of the second WLAN frame is an address of the second AP, a receiver address of the second WLAN frame is the address of the station, and a source address of the second WLAN frame is the address of the second multi-link device.

36. The apparatus according to claim 35, wherein the first WLAN frame is a direct link setup request message, a direct link setup response message, a direct link setup confirm message, a direct link discovery request message, or a direct link discovery response message that is used to set up at least one direct link between the second multi-link device and the third multi-link device.

37. A system for setting up a direct link in a wireless local area network, wherein the system comprises:
the apparatus according to any one of claims 19 to 32, the apparatus according to claim 33 or 34, and the apparatus according to claim 35 or 36.

38. A computer-readable storage medium, wherein the computer-readable storage medium stores a program, and when the program is executed, a computer is enabled to perform the method according to any one of claims 1 to 18.

39. A computer program product, wherein the computer program product comprises a computer program stored in a computer-readable storage medium, and the computer program is loaded by a processor to implement the method according to any one of claims 1 to 18.
